(19) Europäisches Patentamt
European Patent Office
Office européen des brevets

(11) EP 3 594 273 B1

(12) **EUROPEAN PATENT SPECIFICATION**

(45) Date of publication and mention of the grant of the patent:
**15.09.2021 Bulletin 2021/37**

(21) Application number: **18763687.3**

(22) Date of filing: **20.02.2018**

(51) Int Cl.:
***C08J 5/04*** *(2006.01)* ***B32B 27/12*** *(2006.01)*
***B32B 27/32*** *(2006.01)* ***B32B 27/36*** *(2006.01)*
***C08L 23/10*** *(2006.01)* ***C08L 69/00*** *(2006.01)*

(86) International application number:
**PCT/JP2018/005912**

(87) International publication number:
**WO 2018/163799 (13.09.2018 Gazette 2018/37)**

(54) **LAMINATE AND FIBER-REINFORCED RESIN COMPOSITE OBTAINED THEREFROM**

LAMINAT UND DARAUS ERHALTENER FASERVERSTÄRKTER HARZVERBUNDSTOFF

STRATIFIÉ ET COMPOSITE DE RÉSINE RENFORCÉ PAR DES FIBRES OBTENU À PARTIR DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2017 JP 2017045070**

(43) Date of publication of application:
**15.01.2020 Bulletin 2020/03**

(73) Proprietor: **Teijin Limited**
**Osaka-shi, Osaka 530-0005 (JP)**

(72) Inventors:
- **SUMITA, Atsushi**
**Osaka-shi**
**Osaka 530-0005 (JP)**
- **MIYAKE, Toshiyuki**
**Osaka-shi**
**Osaka 530-0005 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 0 673 949**
**EP-A1- 2 668 022**
**WO-A1-2014/038722**
**WO-A1-2018/043360**
**CN-A- 103 059 387**
**JP-A- S 463 240**
**JP-A- H08 157 664**
**JP-A- S59 133 237**
**JP-A- 2002 544 310**
**JP-A- 2013 203 786**
**JP-A- 2015 127 141**
**JP-A- 2016 222 774**
**US-A- 4 454 287**

- **DATABASE WPI Week 201706 2017 Thomson Scientific, London, GB; AN 2017-002178 XP002797440, & JP 2016 222774 A (TEIJIN LTD) 28 December 2016 (2016-12-28)**
- **DATABASE WPI Week 201540 2015 Thomson Scientific, London, GB; AN 2015-32290Q XP002797441, & WO 2015/080019 A1 (MITSUBISHI CHEM CORP) 4 June 2015 (2015-06-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD

The present invention relates to a laminate and a fiber-reinforced resin composite obtained therefrom. More particularly, the present invention relates to a laminate having superior rigidity, strength and low specific gravity that is preferable for use in electrical and electronic components, home appliances, automotive parts, infrastructure-related parts, housing-related parts and the like, and to a fiber-reinforced resin composite obtained therefrom.

BACKGROUND

Fiber-reinforced resin composites are used in automotive and aeronautical members, general industrial materials and a wide range of other fields due to their light weight and desirable physical properties. Since these composites are required to demonstrate surface appearance quality and the like as well as mechanical properties, it is necessary to adequately impregnate the reinforcing fibers with resin and reduce voids and the like.

Thermosetting resins have conventionally been used as matrix resin in order to adequately impregnate the reinforcing fibers with resin. On the other hand, thermoplastic resins are inexpensive and demonstrate superior impact resistance, heat resistance and recyclability in comparison with thermosetting resins. However, since they also have the shortcomings of being difficult to impregnate into reinforcing fibers and require molding at a higher temperature and pressure in comparison with thermosetting resins, these resins are still not widely used.

Polypropylene resins are widely used industrially in electrical and electronic components, home appliances, housings, packaging materials, automotive parts and the like due to their superior moldability, chemical resistance and low specific gravity. Moreover, these resins are also being widely used in bumpers, interior and exterior components and other automotive applications due to the recent demand for reducing automobile weight. Consequently, fiber-reinforced resin composites using polypropylene resin for the matrix resin have heretofore been the target of various studies in anticipation of their use as materials provided with light weight, rigidity and strength. However, since polypropylene resins exhibit poor adhesiveness with carbon fibers, adequate mechanical properties are unable to be obtained simply by laminating the two together.

A composition incorporating a modified polypropylene obtained by grafting an acid anhydride such as maleic anhydride has been proposed in order to improve the adhesiveness between polypropylene resin and carbon fiber chopped strands having a fiber length of about 0.1 mm to 6 mm (PLT1, PTL2). In addition, a sizing agent used in carbon fiber bundles has been proposed that has for the main components thereof a urethane-modified epoxy resin and epoxy resin (PTL3). In addition, the use of a polypropylene resin containing a carboxylate bound to a polymer chain has been proposed in order to improve adhesiveness between polypropylene resin and carbon fibers having a fiber length of about 1 mm to 6 mm (PTL4).

These modified polyolefins are known to improve adhesiveness with chopped strand carbon fibers by reacting with functional groups such as carboxylic acid groups present on the surface of the chopped strand carbon fibers during melting and kneading to chemically bond the polyolefin to the surface of the carbon fibers. However, in the case of forming a composite with sheet-like carbon fibers without going through melting and kneading, adhesiveness with the sheet-like carbon fibers is inadequate, thereby resulting in the problem of inadequate mechanical properties.

On the other hand, the blending of a polycarbonate resin having superior dimensional stability into a polypropylene resin not having adequate dimensional stability followed by melting and kneading has been proposed in order to impart dimensional stability. In such a case, the containing of milled carbon fibers having specific surface properties has been proposed in order to improve compatibility between polypropylene resin and polycarbonate resin (PTL5). According to this proposal, adhesiveness improves between the milled carbon fibers and resin component. However, in the case of forming a composite with sheet-like carbon fibers without going through melting and kneading, adhesiveness with the sheet-like carbon fibers is inadequate, thereby resulting in the problem of inadequate mechanical properties.

US 4,454,287 A describes compositions of a thermoplastic polyolefin resin reinforced with glass fibers and including a minor amount of a high molecular weight aromatic polycarbonate resin as an impact modifier.

[CITATION LIST]

[PATENT LITERATURE]

[PTL1] Japanese Unexamined Patent Publication No. S55-50041

[PTL2] Japanese Unexamined Patent Publication No. S58-113239

[PTL3] Japanese Unexamined Patent Publication No. S61-252371

[PTL4] Japanese Unexamined Patent Publication No. 2010-150359

[PTL5] Japanese Unexamined Patent Publication No. 2016-222774

SUMMARY

[PROBLEM TO BE SOLVED]

An object of the present invention is to solve the aforementioned problems and obtain a laminate having superior adhesiveness with the reinforcing fiber and demonstrating superior rigidity and strength, and a fiber-reinforced resin composite obtained therefrom.

[SOLUTION TO PROBLEM]

As a result of conducting extensive studies to solve the problems, the inventors of the present invention found that a thermoplastic resin sheet composed of a polypropylene resin composition comprising a polypropylene resin and a polycarbonate resin allows the obtaining of a fiber-reinforced resin composite that demonstrates superior rigidity and strength without causing delamination or prominent decreases in physical properties due to incompatibility during lamination with a reinforcing fiber sheet, thereby leading to completion of the present invention.

Namely, according to the present invention, provided is (1) a laminate of a reinforcing fiber sheet and a thermoplastic resin sheet; wherein,

(i) the thermoplastic resin sheet is a polypropylene resin composition composed of (A) 70 parts by weight to 95 parts by weight of polypropylene resin (Component A) and (B) 30 parts by weight to 5 parts by weight of polycarbonate resin (Component B), and

(ii) the content of reinforcing fiber constituting the reinforcing fiber sheet is 20 parts by weight to 150 parts by weight, based on 100 parts by weight of the resin component composed of Component A and Component B,

and wherein the thermoplastic resin sheet is formed of mesh-like hollow fibers.

A more preferable aspect of the present invention is (2): the laminate described in Configuration (1) above, wherein Component B is a polycarbonate resin comprising 20 mol% to 100 mol% of a carbonate constituent unit represented by the following general formula [1] among all carbonate constituent units:

[Chem. 1]

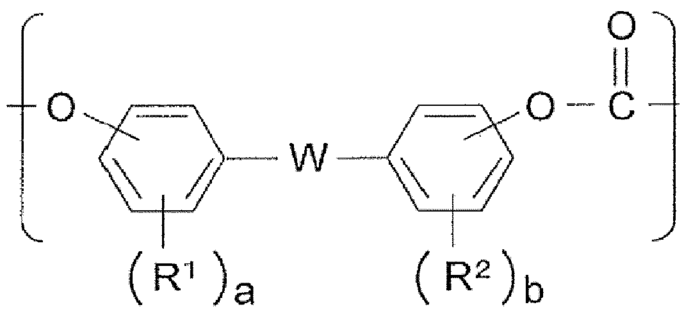

[1]

[wherein, $R^1$ and $R^2$ respectively and independently represent a group selected from the group consisting of a hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 6 to 14 carbon atoms, aryloxy group having 6 to 14 carbon atoms, aralkyl group having 7 to 20 carbon atoms, aralkyloxy group having 7 to 20 carbon atoms, nitro group, aldehyde group, cyano group and carboxyl

group, and in the case of a plurality of each, the plurality of groups may be the same or different, a and b respectively represent an integer of 1 to 4, and W represents a single bond or at least one group selected from the group consisting of groups represented by the following general formula [2]:

[Chem. 2]

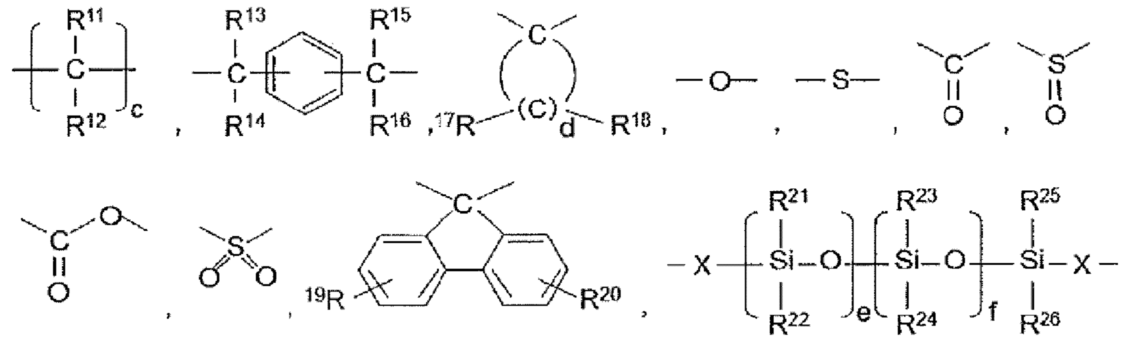

〔2〕

(wherein, $R^{11}$, $R^{12}$, $R^{13}$, $R^{14}$, $R^{15}$, $R^{16}$, $R^{17}$ and $R^{18}$ respectively and independently represent a group selected from the group consisting of a hydrogen atom, alkyl group having 1 to 18 carbon atoms, aryl group having 6 to 14 carbon atoms and aralkyl group having 7 to 20 carbon atoms, $R^{19}$ and $R^{20}$ respectively and independently represent a group selected from the group consisting of a hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, $R^{21}$, $R^{22}$, $R^{23}$, $R^{24}$, $R^{25}$ and $R^{26}$ respectively and independently represent a hydrogen atom, alkyl group having 1 to 12 carbon atoms or substituted or unsubstituted aryl group having 6 to 12 carbon atoms, and in the case of a plurality of each, the plurality of groups may be the same or different, c represents an integer of 1 to 10, d represents an integer of 4 to 7, e represents a natural number, f represents 0 or a natural number, e + f represents a natural number of 150 or less, and X represents a divalent aliphatic group having 2 to 8 carbon atoms)].

A more preferable aspect of the present invention is (3): the laminate described in the Configuration (1) or (2) above, wherein the polypropylene resin composition further comprises (C) a modified polyolefin component (Component C) at 1 part by weight to 100 parts by weight based on 100 parts by weight of the resin component composed of Component A and Component B.

A more preferable aspect of the present invention is (4): the laminate described in any of Configurations (1) to (3) above, wherein the polypropylene resin composition further comprises (D) a styrene-based thermoplastic elastomer (Component D) at 1 part by weight to 20 parts by weight based on 100 parts by weight of the resin component composed of Component A and Component B.

A more preferable aspect of the present invention is (5): the laminate described in any of Configurations (1) to (4) above, wherein the reinforcing fiber sheet is a woven knit fabric, nonwoven fabric or unidirectional sheet.

A more preferable aspect of the present invention is (6): the laminate described in any of Configurations (1) to (5) above, wherein the fibers constituting the reinforcing fiber sheet are at least one type of fiber selected from the group consisting of carbon fiber and glass fiber.

A more preferable aspect of the present invention is (7): the laminate described in Configuration (6) above, wherein the fibers constituting the reinforcing fiber sheet are carbon fibers in which the ratio of the number of atoms of oxygen (O) to the number of atoms of carbon (C) on the fiber surface as measured by X-ray photoelectron spectroscopy in the form of the surface oxygen concentration (O/C) is 0.15 or more.

A more preferable aspect of the present invention is (8): a fiber-reinforced resin composite formed of the laminate described in any of Configurations (1) to (7) above.

A more preferable aspect of the present invention is (9): a fiber-reinforced resin composite obtained by carrying out pressure treatment on the laminate described in any of Configurations (1) to (7) above.

A more preferable aspect of the present invention is (10): a method for producing a fiber-reinforced resin composite including carrying out pressure treatment on the laminate described in any of Configurations (1) to (7) above at a temperature equal to or higher than the melting temperature of the thermoplastic resin constituting the thermoplastic resin sheet and lower than the heat resistant temperature of the reinforcing fiber constituting the reinforcing fiber sheet.

[ADVANTAGEOUS EFFECTS OF INVENTION]

The laminate of the present invention is a material that demonstrates high flexibility and superior conformance to a mold and the like. In addition, a fiber-reinforced resin composite obtained by subjecting this laminate to heat and pressure treatment is useful in applications such as electrical and electronic components, home appliances, automotive parts, infrastructure-related parts and housing-related parts due to its superior rigidity, dimensional stability and chemical resistance, and the industrial effects demonstrated thereby are extraordinary.

BRIEF DESCRIPTION OF DRAWINGS

FIG. 1 is a schematic diagram of a cross-sectional view of a hollow fiber used in the present invention.

FIG. 2 is a photomicrograph obtained with an electron microscope of a cross-sectional view of hollow fibers used in the present invention.

FIG. 3 is a schematic diagram showing a method for measuring the degree of deformation of a hollow fiber used in the present invention.

FIG. 4 is a schematic diagram of a cross-sectional view of a laminate of the present invention.

FIG. 5 is a schematic diagram of a cross-sectional view of a fiber-reinforced resin composite of the present invention.

DESCRIPTION OF EMBODIMENTS

The following provides a detailed explanation of the present invention.

<Laminate>

(Component A: Polypropylene Resin)

Although the polypropylene resin used as Component A of the polypropylene resin composition constituting the thermoplastic resin sheet in the present invention is a polymer of propylene, copolymers with other monomers are also included in the present invention. An example of the polypropylene resin of the present invention is a homopolypropylene resin. In addition, block copolymers of propylene and ethylene, block copolymers of propylene and an $\alpha$-olefin having 4 to 10 carbon atoms (also referred to as "block polypropylene"), random copolymers of propylene and ethylene, and random copolymers of propylene and an $\alpha$-olefin having 4 to 10 carbon atoms (also referred to as "random polypropylene") are also included. Incidentally, "block polypropylene" and "random polypropylene" are collectively referred to as "polypropylene copolymers".
In the present invention, one type or two or more types of the aforementioned homopolypropylene resin, block polypropylene or random polypropylene may be used for the polypropylene resin, and among these, homopolypropylene and block polypropylene are preferable. Incidentally, Component C in the form of the modified polypropylene resin is not included in the polypropylene resin.
Examples of $\alpha$-olefins having 4 to 10 carbon atoms used in the polypropylene copolymer include 1-butene, 1-pentene, isobutylene, 3-methyl-1-butene, 1-hexene, 3,4-dimethyl-1-butene, 1-heptene and 3-methyl-1-hexene.
The content of ethylene in the polypropylene copolymer among all monomers is preferably 5% by weight or less. The content of $\alpha$-olefin having 4 to 10 carbon atoms in the polypropylene copolymer among all monomers is preferably 20% by weight or less.
The polypropylene copolymer is preferably a copolymer of propylene and ethylene or a copolymer of propylene and 1-butene, and particularly preferably a copolymer of propylene and ethylene.
The melt flow rate of the polypropylene resin in the present invention (230°C, 2.16 kg) is preferably 0.1 g/10 min to 5 g/10 min, more preferably 0.2 g/10 min to 4 g/10 min and particularly preferably 0.3 g/10 min to 3 g/10 min. If the melt flow rate of the polypropylene resin is less than 0.1 g/10 min, moldability is inferior due to high viscosity, while if the melt flow rate exceeds 5 g/10 min, adequate toughness may not be demonstrated. Incidentally, melt flow rate is also referred to as "MFR". MFR was measured in compliance with ISO 1133.

(Component B: Polycarbonate Resin)

The polycarbonate resin used as Component B of the polypropylene resin composition constituting the thermoplastic resin sheet is normally obtained by reacting a dihydroxy compound and carbonate precursor by a method such as interfacial polycondensation or melt transesterification. Other examples include that obtained by polymerizing a carbonate prepolymer by solid phase transesterification or that obtained by polymerizing a cyclic carbonate compound by ring-opening polymerization.

The dihydroxy compound used here may be that normally used as a dihydroxy component of an aromatic polycarbonate and may be a bisphenol or aliphatic diol. A bisphenol represented by the following formula [3] is preferably used for the bisphenol:

[Chem. 3]

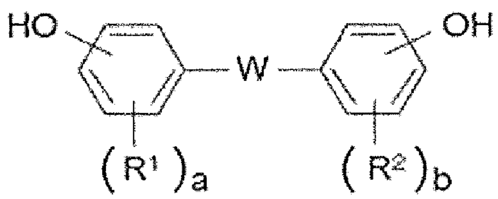

[3]

[wherein, $R^1$ and R2 respectively and independently represent a group selected from the group consisting of a hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 6 to 14 carbon atoms, aryloxy group having 6 to 14 carbon atoms, aralkyl group having 7 to 20 carbon atoms, aralkyloxy group having 7 to 20 carbon atoms, nitro group, aldehyde group, cyano group and carboxyl group, and in the case of a plurality of each, the plurality of groups may be the same or different, a and b respectively represent an integer of 1 to 4, and W represents a single bond or at least one group selected from the group consisting of groups represented by the following general formula [2]:

[Chem. 4]

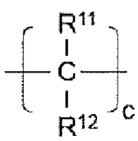 , 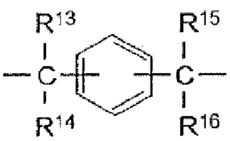 , 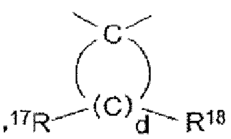 , 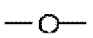 , 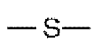 , 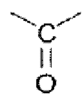 , 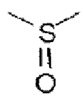

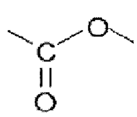 , 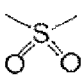 , 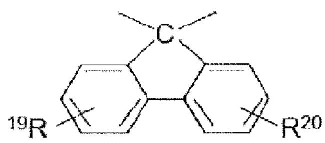 ; 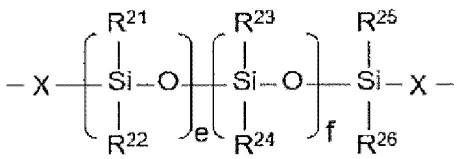

[2]

(wherein, $R^{11}$, $R^{12}$, $R^{13}$, $R^{14}$, $R^{15}$, $R^{16}$, $R^{17}$ and $R^{18}$ respectively and independently represent a group selected from the group consisting of a hydrogen atom, alkyl group having 1 to 18 carbon atoms, aryl group having 6 to 14 carbon atoms and aralkyl group having 7 to 20 carbon atoms, $R^{19}$ and $R^{20}$ respectively and independently represent a group selected from the group consisting of a hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, $R^{21}$, $R^{22}$, $R^{23}$, $R^{24}$, $R^{25}$ and $R^{26}$ respectively and independently represent a hydrogen atom, alkyl group having 1 to 12 carbon atoms or substituted or unsubstituted aryl group having 6 to 12 carbon atoms, and in the case of a plurality of each, the plurality of groups may be the same or different, c represents an integer of 1 to 10, d represents an integer of 4 to 7, e represents a natural number, f represents 0 or a

natural number, e + f represents a natural number of 150 or less, and X represents a divalent aliphatic group having 2 to 8 carbon atoms)].

Examples of the bisphenol include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyl diphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol and 1,3-bis(4-hydroxyphenyl)-5,7-dimethyladamantane.

Examples of aliphatic diols include 2,2-bis(4-hydroxycyclohexyl)-propane, 1,14-tetradecanediol, octaethylene glycol, 1,16-hexadecanediol, 4,4'-bis(2-hydroxyethoxy) biphenyl, bis{(2-hydroxyethoxy)phenyl} methane, 1,1-bis{(2-hydroxyethoxy)phenyl} ethane, 1,1-bis{(2-hydroxyethoxy)phenyl}-l-phenylethane, 2,2-bis{(2-hydroxyethoxy)phenyl} propane, 2,2-bis{(2-hydroxyethoxy)-3-methylphenyl} propane, 1,1-bis{(2-hydroxyethoxy)phenyl}-3,3,5-trimethylcyclohexane, 2,2-bis{4-(2-hydroxyethoxy)-3,3'-biphenyl} propane, 2,2-bis{(2-hydroxyethoxy)-3-isopropylphenyl} propane, 2,2-bis{3-t-butyl-4-(2-hydroxyethoxy)phenyl} propane, 2,2-bis{(2-hydroxyethoxy)phenyl} butane, 2,2-bis{(2-hydroxyethoxy)phenyl}-4-methylpentane, 2,2-bis{(2-hydroxyethoxy)phenyl} octane, 1,1-bis{(2-hydroxyethoxy)phenyl}decane, 2,2-bis{3-bromo-4-(2-hydroxyethoxy)phenyl} propane, 2,2-bis{3,5-dimethyl-4-(2-hydroxyethoxy)phenyl} propane, 2,2-bis{3-cyclohexyl-4-(2-hydroxyethoxy)phenyl} propane, 1,1-bis{3-cyclohexyl-4-(2-hydroxyethoxy)phenyl} cyclohexane, bis{(2-hydroxyethoxy)phenyl} diphenylmethane, 9,9-bis{(2-hydroxyethoxy)phenyl} fluorene, 9,9-bis{4-(2-hydroxyethoxy)-3-methylphenyl} fluorene, 1,1-bis{(2-hydroxyethoxy)phenyl} cyclohexane, 1,1-bis{(2-hydroxyethoxy)phenyl} cyclopentane, 4,4'-bis(2-hydroxyethoxy) diphenyl ether, 4,4'-bis(2-hydroxyethoxy)-3,3'-dimethyl diphenyl ether, 1,3-bis[2-{(2-hydroxyethoxy)phenyl}propyl] benzene, 1,4-bis[2-{(2-hydroxyethoxy)phenyl}propyl] benzene, 1,4-bis{(2-hydroxyethoxy)phenyl} cyclohexane, 1,3-bis{(2-hydroxyethoxy)phenyl} cyclohexane, 4,8-bis{(2-hydroxyethoxy)phenyl}tricyclo[5.2.1.02.6] decane, 1,3-bis{(2-hydroxyethoxy)phenyl}-5,7-dimethyladamantane, 3,9-bis(2-hydroxy-1,1-dimethylethyl)-2,4,8,10-tetraoxaspiro(5,5) undecane, 1,4:3,6-dianhydro-D-sorbitol (isosorbide), 1,4:3,6-dianhydro-D-mannitol (isomannide), and 1,4:3,6-dianhydro-L-iditol (isoidide).

Among these, aromatic bisphenols are preferable, and among these, 1,1-bis(4-hydroxyphenyl)-1-phenylethane, 2,2-bis(4-hydroxyphenyl) propane, 2,2-bis(4-hydroxy-3-methylphenyl) propane, 1,1-bis(4-hydroxyphenyl) cyclohexane, 1,1-bis(4-hydroxyphenyl)-3,3,5-trimethyl cyclohexane, 4,4'-sulfonyldiphenol, 2,2'-dimethyl-4,4'-sulfonyldiphenol, 9,9-bis(4-hydroxy-3-methylphenyl) fluorene, 1,3-bis{2-(4-hydroxyphenyl)propyl} benzene and 1,4-bis{2-(4-hydroxyphenyl)propyl} benzene are preferable. 2,2-bis(4-hydroxyphenyl) propane, 1,1-bis(4-hydroxyphenyl) cyclohexane, 4,4'-sulfonyldiphenol and 9,9-bis(4-hydroxy-3-methylphenyl) fluorene are particularly preferable. Among these, 2,2-bis(4-hydroxyphenyl) propane having superior strength and favorable durability is most preferable. In addition, these may be used alone or two or more types may be used in combination.

The polycarbonate resin used as Component B of the present invention may also be a branched polycarbonate resin by combining the use of a branching agent with the aforementioned dihydroxy compound.

Examples of polyfunctional aromatic compounds having three or more functional groups used in this branched polycarbonate resin include trisphenols such as fluoroglucine, fluoroglucide, 4,6-dimethyl-2,4,6-tris(4-hydroxydiphenyl) heptene, 2,2,4,6-trimethyl-2,4,6-tris(4-hydroxyphenyl) heptane, 1,3,5-tris(4-hydroxyphenyl) benzene, 1,1,1-tris(4-hydroxyphenyl) ethane, 1,1,1-tris(3,5-dimethyl-4-hydroxyphenyl) ethane, 2,6-bis(2-hydroxy-5-methylbenzyl)-4-methyl phenol or 4-{4-[1,1-bis(4-hydroxyphenyl)ethyl]benzene}-$\alpha,\alpha$-dimethylbenzyl phenol. In addition, other examples include tetra(4-hydroxyphenyl) methane, bis(2,4-dihydroxyphenyl) ketone and 1,4-bis(4,4-dihydroxytriphenylmethyl) benzene. Additional examples include trimellitic acid, pyromellitic acid, benzophenone tetracarboxylic acid and acid chlorides thereof. Among these, 1,1,1-tris(4-hydroxyphenyl) ethane and 1,1,1-tris(3,5-dimethyl-4-hydroxyphenyl) ethane are preferable, and 1,1,1-tris(4-hydroxyphenyl) ethane is particularly preferable.

These polycarbonate resins are produced by a reaction means that is itself known for producing ordinary aromatic polycarbonate resins, and is produced by, for example, reacting a carbonate precursor substance such as phosgene or carbonic diester with an aromatic dihydroxy component. The following provides a brief explanation of the basic means for carrying out this production method.

In a reaction using phosgene, for example, for the carbonate precursor substance, the reaction is normally carried out in the presence of an acid binder and solvent. Examples of acid binders used include alkaline metal hydroxides

such as sodium hydroxide or potassium hydroxide and amine compounds such as pyridine. Examples of solvents used include halogenated hydrocarbons such as methylene chloride or chlorobenzene. In addition, a catalyst such as a tertiary amine or quaternary ammonium salt can also be used to accelerate the reaction. In that case, the reaction temperature is normally 0°C to 40°C and the reaction time is several minutes to 5 hours. A transesterification reaction using a carbonic diester for the carbonate precursor substance is carried out by a method consisting of stirring a prescribed ratio of aromatic dihydroxy component with the carbonic diester in an inert gas atmosphere while heating followed by distilling off the alcohol or phenol formed. Although differing according to the boiling point of the alcohol or phenol formed, the reaction temperature is normally within the range of 120°C to 300°C. The reaction is completed while distilling off the alcohol or phenol formed, by reducing pressure starting in an early stage of the reaction. In addition, a catalyst normally used in a transesterification reaction can be used to accelerate the reaction. Examples of the carbonic diester used in the aforementioned transesterification reaction include diphenyl carbonate, dinaphthyl carbonate, bis(diphenyl) carbonate, dimethyl carbonate, diethyl carbonate and dibutyl carbonate. Among these, diphenyl carbonate is particularly preferable.

A terminating agent can be used in the polymerization reaction. A terminating agent is used to adjust molecular weight, and since the ends of the resulting polycarbonate resin are blocked, it demonstrates superior heat stability in comparison with those in which the ends are not blocked. The terminating agent may be the monofunctional phenols represented by the following formulas [4] to [6]:

[Chem. 5]

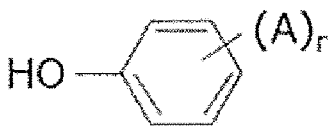

[4]

(wherein, A represents a hydrogen atom, alkyl group having 1 to 9 carbon atoms, alkylphenyl group (wherein the number of carbon atoms of the alkyl moiety is 1 to 9), phenyl group, or phenylalkyl group (wherein the number of carbon atoms of the alkyl moiety is 1 to 9), and r represents an integer of 1 to 5 and preferably 1 to 3); and,

[Chem. 6]

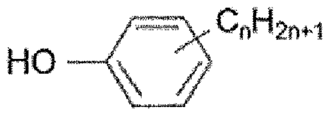

[5]

[Chem. 7]

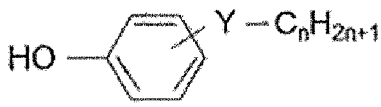

[6]

(wherein, in formulas [5] and [6], Y represents -R-O-, -R-CO-O- or -R-O-CO-, R represents a single bond or divalent aliphatic hydrocarbon group having 1 to 10 carbon atoms and preferably 1 to 5 carbon atoms, and n represents an integer of 10 to 50).

Specific examples of monofunctional phenols represented by the aforementioned general formula [4] include phenol, isopropyl phenol, p-tert-butyl phenol, p-cresol, p-cumyl phenol, 2-phenyl phenol, 4-phenyl phenol and isooctyl phenol.

In addition, the monofunctional phenol represented by the aforementioned formulas [5] and [6] is a phenol having a long chain alkyl group or aliphatic ester group as a substituent thereof, and when the ends of a polycarbonate resin are blocked using these monofunctional phenols, not only do the monofunctional phenols function as terminating

agents or molecular weight adjusters, but they also improve melt flowability of the resin and facilitate molding processing while also having the effect of lowering the water absorption rate of the resin, and are therefore used preferably.

The substituted phenol represented by the aforementioned general formula [5] is preferably that in which n is 10 to 30 and particularly preferably that in which n is 10 to 26. Specific examples thereof include decyl phenol, dodecyl phenol, tetradecyl phenol, hexadecyl phenol, octadecyl phenol, eicosyl phenol, docosyl phenol and triacontyl phenol.

In addition, compounds in which Y is -R-CO-O- and R is a single bond are suitable as the substituted phenol of the aforementioned general formula (6), and those in which n is 10 to 30, and particularly 10 to 26, are preferable. Specific examples thereof include decyl hydroxybenzoate, dodecyl hydroxybenzoate, tetradecyl hydroxybenzoate, hexadecyl hydroxybenzoate, eicosyl hydroxybenzoate, docosyl hydroxybenzoate and triacontyl hydroxybenzoate.

Among these monofunctional phenols, monofunctional phenols represented by the aforementioned general formula [4] are preferable, alkyl-substituted or phenylalkyl-substituted phenols are more preferable, and p-tert-butyl phenol, p-cumyl phenol or 2-phenyl phenol is particularly preferable. The terminating agent of these monofunctional phenols is preferably introduced into the ends at least at 5 mol% and preferably at least 10 mol% based on all ends of the resulting polycarbonate resin, and the terminating agent may be used alone or two or more types may be used as a mixture.

The polycarbonate resin used as Component B of the present invention may be a polyester carbonate obtained by copolymerizing an aromatic dicarboxylic acid such as terephthalic acid, isophthalic acid or naphthalene dicarboxylic acid, or a derivative thereof, within a range that does not impair the object of the present invention.

The viscosity-average molecular weight of the polycarbonate resin used as Component B of the present invention is preferably within the range of 13,000 to 25,000, more preferably within the range of 13,000 to 21,000, even more preferably within the range of 16,000 to 21,000 and most preferably within the range of 16,000 to 20,000. If the viscosity-average molecular weight exceeds 25,000, melt viscosity becomes excessively high and moldability may be inferior, while if the viscosity-average molecular weight is less than 13,000, problems with mechanical strength may occur. Incidentally, viscosity-average molecular weight as referred to in the present invention is calculated by first determining specific viscosity calculated with the following equation using an Ostwald viscometer from a solution obtained by dissolving 0.7 g of polycarbonate resin in 100 ml of methylene chloride at 20°C:

$$\text{specific viscosity } (\eta_{sp}) = (t - t_0)/t_0$$

(wherein, $t_0$ is the falling number in seconds of the methylene chloride and t is the falling number in seconds of the sample solution), followed by determining viscosity-average molecular weight M by entering the determined specific viscosity into the following equation:

$$\eta_{sp}/c = [\eta] + 0.45 \times [\eta]^2 c$$

(wherein, [η] represents intrinsic viscosity)

$$[\eta] = 1.23 \times 10^{-4} M^{0.83}$$

c = 0.7.

The total amount of Cl (chlorine) in the polycarbonate resin used as Component B of the present invention is preferably 0 ppm to 200 ppm and more preferably 0 ppm to 150 ppm. If the total amount of Cl in the polycarbonate resin exceeds 200 ppm, hue and heat stability may become poor, thereby making this undesirable.

The content of Component B based on 100 parts by weight for the total amount of Component A and Component B is 30 parts by weight to 5 parts by weight, preferably 25 parts by weight to 5 parts by weight, more preferably 20 parts by weight to 5 parts by weight and most preferably 20 parts by weight to 10 parts by weight. If the amount of Component B is greater than 30 parts by weight, chemical resistance worsens. In addition, if the amount of Component B is less than 5 parts by weight, adhesiveness between the resin and reinforcing fibers decreases and strength is not adequately demonstrated when in the form of a fiber-reinforced resin composite.

(Component C: Modified Polyolefin Resin)

A modified polyolefin resin can be added as a compatibilizing agent to the polypropylene resin composition constituting the thermoplastic resin sheet. The modified polyolefin resin improves interfacial adhesiveness between the polypropylene resin and reinforcing fibers and improves strength of the fiber-reinforced resin composite.

The modified polyolefin resin is preferably an acid-modified polyolefin resin that has been modified with an unsaturated carboxylic acid or derivative thereof. Examples of modified polyolefin resins include polyethylene resin and polypropylene resin, and polypropylene resin is preferable. Incidentally, the modified polypropylene resin includes propylene homopolymers, propylene random copolymers and propylene block copolymers. A method such as graft modification or copolymerization can be used to modify the polyolefin resin.

Examples of unsaturated carboxylic acids used to modify the polyolefin resin include acrylic acid, methacrylic acid, maleic acid, nadic acid, fumaric acid, itaconic acid, crotonic acid, citraconic acid, sorbic acid, mesaconic acid and angelic acid. In addition, examples of derivatives of these unsaturated carboxylic acids include acid anhydrides, esters, amides, imides and metal salts. Examples thereof include maleic anhydride, itaconic anhydride, citraconic anhydride, nadic anhydride, methyl acrylate, methyl methacrylate, ethyl acrylate, butyl acrylate, monoethyl maleate, acrylamide, maleic monoamide, maleimide, N-butylmaleimide, sodium acrylate and sodium methacrylate. Among these, unsaturated dicarboxylic acids and derivatives thereof are preferable, and maleic anhydride or phthalic anhydride is particularly preferable.

The crystallization temperature (Tc) of the modified polypropylene resin is preferably 90°C to 125°C and more preferably 110°C to 120°C. Intrinsic viscosity is preferably 0.1 dl/g to 2.4 dl/g and more preferably 0.2 dl/g to 1.6 dl/g. The crystallization temperature (Tc) of the modified polyolefin resin can be measured with a differential scanning calorimeter (DSC). Intrinsic viscosity of the modified polyolefin resin can be measured at 135°C in tetralin. The added amount of carboxylic acid in the modified polyolefin resin is preferably within the range of 0.1% by weight to 14% by weight and more preferably within the range of 0.8% by weight to 8% by weight. The amount of carboxylic acid added can be determined from the area of peaks from 1670 $cm^{-1}$ to 1810 $cm^{-1}$ by measuring the IR spectrum of the acid-modified polyolefin resin.

The content of the modified polyolefin resin based on 100 parts by weight of the total of Component A and Component B is preferably 1 part by weight to 100 parts by weight, more preferably 3 parts by weight to 95 parts by weight and even more preferably 3 parts by weight to 90 parts by weight. If the content of the modified polyolefin resin is less than 1 part by weight, strength of the fiber-reinforced resin composite may not improve, while if the content exceeds 100 parts by weight, heat stability may become poor.

In the case of desiring to obtain a fiber-reinforced resin composite having particularly superior heat stability, the content of the modified polyolefin resin based on 100 parts by weight of the total of Component A and Component B is preferably 1 part by weight to 20 parts by weight, more preferably 3 parts by weight to 20 parts by weight, and even more preferably 3 parts by weight to 15 parts by weight.

(Component D: Styrene-based Thermoplastic Elastomer)

A styrene-based thermoplastic elastomer can be further added to the polypropylene resin composition constituting the thermoplastic resin sheet. The styrene-based thermoplastic elastomer improves compatibility between the polypropylene resin and polycarbonate resin and improves the strength (flexural modulus, bending strength) of the fiber-reinforced resin composite.

Examples of the styrene-based thermoplastic elastomer include styrene-ethylene·butylene-styrene block copolymers, styrene-hydrogenated butadiene-styrene triblock copolymers, styrene-isoprene-styrene triblock copolymers, styrene-hydrogenated isoprene-styrene triblock copolymers, styrene-hydrogenated butadiene diblock copolymers, styrene-hydrogenated isoprene diblock copolymers and styrene-isoprene diblock copolymers, and among these, styrene-ethylene·butylene-styrene block copolymers are most preferable.

In addition, block copolymers represented by the following formula (I) or (II) are also used preferably.

$$X\text{-}(Y\text{-}X)_n \ldots \qquad (I)$$

$$(X\text{-}Y)_n \ldots \qquad (II)$$

In formulas (I) and (II), X represents a styrene polymer block and in formula (I), the degree of polymerization at both ends of the molecular chain may be the same or different. Y represents at least one type of polymer block selected from an isoprene polymer block, hydrogenated butadiene polymer block and hydrogenated isoprene polymer block. In addition, n represents an integer of 1 or more.

The content of Component X in the aforementioned block copolymer is preferably 20% by weight to 80% by weight and more preferably 25% by weight to 70% by weight. If the content thereof is less than 20% by weight, rigidity of the resin composition tends to decrease. In addition, if the content thereof exceeds 80% by weight, molding processability and impact strength tend to decrease. Specific examples of this block copolymer include styrene-hydrogenated butadiene-styrene triblock copolymers, styrene-isoprene-styrene triblock copolymers, styrene-hydrogenated isoprene-styrene triblock copolymers, styrene-hydrogenated butadiene diblock copolymers, styrene-hydrogenated isoprene diblock copolymers and styrene-isoprene diblock copolymers.

The weight-average molecular weight of the styrene-based thermoplastic elastomer is preferably 250,000 or less, more preferably 220,000 or less and even more preferably 200,000 or less. If the weight-average molecular weight exceeds 250,000, molding processability may decrease and dispersibility in the polypropylene resin may be poor. In addition, although there are no particular limitations on the lower limit of weight-average molecular weight, the lower limit is preferably 40,000 or more and more preferably 50,000 or more. Incidentally, weight-average molecular weight was measured using the following method. Namely, molecular weight as polystyrene was measured by gel permeation chromatography followed by calculation of the weight-average molecular weight.

The content of the styrene-based thermoplastic elastomer based on 100 parts by weight of the resin components is preferably 1 part by weight to 20 parts by weight, more preferably 3 parts by weight to 15 parts by weight, even more preferably 5 parts by weight to 13 parts by weight and most preferably 5 parts by weight to 10 parts by weight. If the content of the styrene-based thermoplastic elastomer is less than 1 part by weight, strength of the fiber-reinforced resin composite may not improve, while if the content exceeds 20 parts by weight, gas may be generated when molding the fiber-reinforced resin composite and molding processability may end up decreasing.

(Other Components)

Various types of additives can be incorporated in the polypropylene resin composition constituting the thermoplastic resin sheet within a range that does not impair the effects of the present invention. Examples of such additives include phosphorous-based heat stabilizers, phenol-based heat stabilizers, sulfur-containing antioxidants, mold release agents, ultraviolet absorbents, hindered amine-based photostabilizers, compatibilizing agents, flame retardants and dyes. The following provides a detailed explanation of these additives.

(Phosphorous-based Heat Stabilizer)

Any of a phosphite compound, phosphonite compound and phosphate compound can be used as a phosphorous-based heat stabilizer.

Various compounds can be used for the phosphite compound. Specific examples thereof include phosphite compounds represented by the following general formula [7], phosphite compounds represented by the following general formula [8] and phosphite compounds represented by the following general formula [9]:

[Chem. 8]

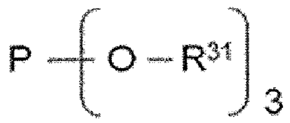

[7]

(wherein, $R^{31}$ represents a hydrogen atom, alkyl group having 1 to 20 carbon atoms, aryl group having 6 to 20 carbon atoms, alkaryl group having 6 to 20 carbon atoms, aralkyl group having 7 to 30 carbon atoms or halo, alkylthio (wherein, the alkyl group has 1 to 30 carbon atoms) or hydroxyl substituents thereof, and any case in which the three $R^{31}$ groups may be the same or different can be selected, or a cyclic structure obtained by deriving from a divalent phenol can be selected);

[Chem. 9]

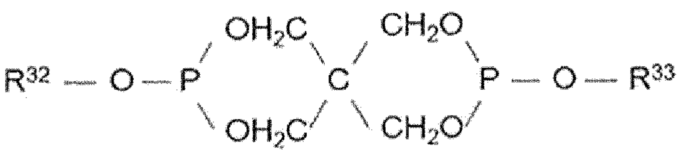

[8]

(wherein, $R^{32}$ and $R^{33}$ respectively represent a hydrogen atom, alkyl group having 1 to 20 carbon atoms, aryl group having 6 to 20 carbon atoms, alkylaryl group having 6 to 20 carbon atoms, aralkyl group having 7 to 30 carbon atoms,

cycloalkyl group having 4 to 20 carbon atoms or 2-(4-oxyphenyl)propyl-substituted aryl group having 15 to 25 carbon atoms, and furthermore, cycloalkyl groups and aryl groups not substituted with an alkyl group or those substituted with an alkyl group can also be selected); and,

[Chem. 10]

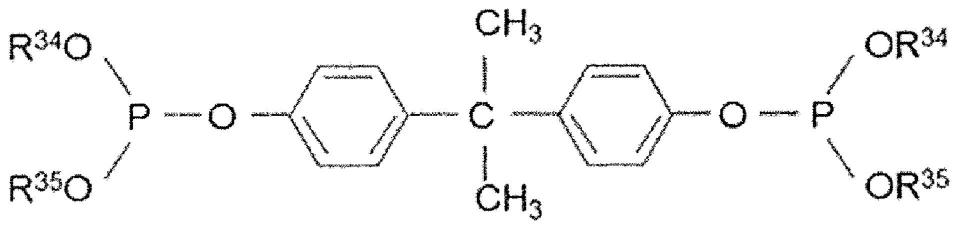

〔9〕

(wherein, $R^{34}$ and $R^{35}$ represent alkyl groups having 12 to 15 carbon atoms, and furthermore, either case in which $R^{34}$ and $R^{35}$ are mutually the same or different can be selected).

Examples of phosphonite compounds include phosphonite compounds represented by the following general formula [10] and phosphonite compounds represented by the following general formula [11]:

[Chem. 11]

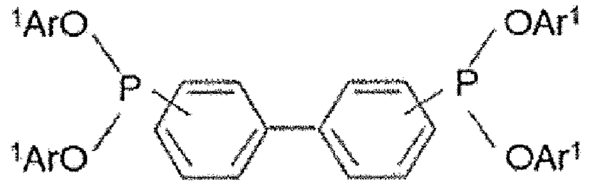

〔10〕

[Chem. 12]

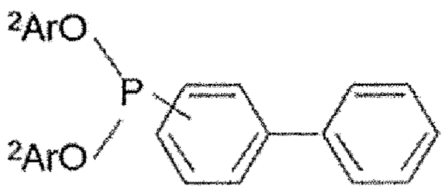

〔11〕

(wherein, $Ar^1$ and $Ar^2$ represent aryl groups having 6 to 20 carbon atoms, alkylaryl groups having 6 to 20 carbon atoms, or 2-(4-oxyphenyl)propyl-substituted aryl groups having 15 to 25 carbon atoms, and any of the cases in which the four $Ar^1$ are mutually the same or different or those in which $Ar^2$ are mutually the same or different can be selected).

Preferable specific examples of phosphite compounds represented by the aforementioned general formula [7] include diphenyl isooctyl phosphite, 2,2'-methylenebis(4,6-di-tert-butylphenyl) octyl phosphite, diphenylmono(tridecyl) phosphite, phenyl diisodecyl phosphite and phenyl di(tridecyl) phosphite.

Preferable specific examples of phosphite compounds represented by the aforementioned general formula [8] include distearyl pentaerythritol diphosphite, bis(2,4-di-tert-butylphenyl) pentaerythritol diphosphite, bis(2,6-di-tert-butyl-4-methylphenyl) pentaerythritol diphosphite, phenyl bisphenol A pentaerythritol diphosphite and dicyclohexyl pentaerythritol diphosphite. Preferable examples include distearyl pentaerythritol diphosphite, bis(2,4-di-tert-butylphenyl) pentaerythritol diphosphite and bis(2,6-di-tert-butyl-4-methylphenyl) pentaerythritol diphosphite. One type of phosphite compound can be used or two or more types can be used in combination.

Preferable specific examples of phosphite compounds represented by the aforementioned general formula [9] include 4,4'-isopropylidene diphenol tetratridecyl phosphite.

Preferable specific examples of phosphonite compounds represented by the aforementioned general formula [10] include tetrakis(2,4-di-iso-propylphenyl)-4,4'-biphenylene diphosphonite, tetrakis(2,4-di-n-butylphenyl)-4,4'-biphenylene diphosphonite, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-iso-propylphenyl)-4,4'-biphenylene diphosphonite, tetrakis(2,6-di-n-butylphenyl)-4,4'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite and tetrakis(2,6-di-tert-butylphenyl)-3,3'-biphenylene diphosphonite. Among these, tetrakis(di-tert-butylphenyl)-biphenylene diphosphonite is preferable and tetrakis(2,4-di-tert-butylphenyl)-biphenylene diphosphonite is more preferable. A mixture of two or more types of this tetrakis(2,4-di-tert-butylphenyl)-biphenylene diphosphonite is preferable. More specifically, although one type of tetrakis(2,4-di-tert-butylphenyl)-4,4'-biphenylene diphosphonite, tetrakis(2,4-di-tert-butylphenyl)-4,3'-biphenylene diphosphonite and tetrakis(2,4-di-tert-butylphenyl)-3,3'-biphenylene diphosphonite can be used or two or more types can be used in combination, a mixture of three types is preferable.

Preferable specific examples of phosphonite compounds represented by the aforementioned general formula [11] include bis(2,4-di-iso-propylphenyl)-4-phenyl-phenyl phosphonite, bis(2,4-di-n-butylphenyl)-3-phenyl-phenyl phosphonite, bis(2,4-di-tert-butylphenyl)-4-phenyl-phenyl phosphonite, bis(2,4-di-tert-butylphenyl)-3-phenyl-phenyl phosphonite, bis(2,6-di-iso-propylphenyl)-4-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Bis(di-tert-butylphenyl)-phenyl-phenyl phosphonite is preferable and bis(2,4-di-tert-butylphenyl)-phenyl-phenyl phosphonite is more preferable.

A mixture of two or more types of this bis(2,4-di-tert-butylphenyl)-phenyl-phenyl phosphonite is preferable. More specifically, one type of bis(2,4-di-tert-butylphenyl)-4-phenyl-phenyl phosphonite and bis(2,4-di-tert-butylphenyl)-3-phenyl-phenyl phosphonite can be used or two or more types can be used in combination. A mixture of two types is preferable. In addition, in the case of a mixture of two types, the mixing ratio thereof in terms of the weight ratio is preferably within the range of 5:1 to 5:4 and more preferably within the range of 5:2 to 5:3.

On the other hand, examples of phosphate compounds include tributyl phosphate, trimethyl phosphate, tricresyl phosphate, triphenyl phosphate, trichlorophenyl phosphate, triethyl phosphate, diphenylcresyl phosphate, diphenyl monoorthoxenyl phosphate, tributoxyethyl phosphate, dibutyl phosphate, dioctyl phosphate and diisopropyl phosphate. Trimethyl phosphate is preferable.

Among the aforementioned phosphorous-containing heat stabilizers, examples of more preferable compounds include compounds represented by general formulas [12] and [13]:

[Chem. 13]

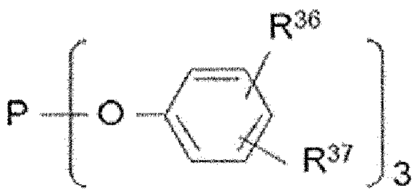

[12]

(wherein, $R^{36}$ and $R^{37}$ respectively and independently represent an alkyl group having 1 to 12 carbon atoms, cycloalkyl group, aryl group or aralkyl group); and,

[Chem. 14]

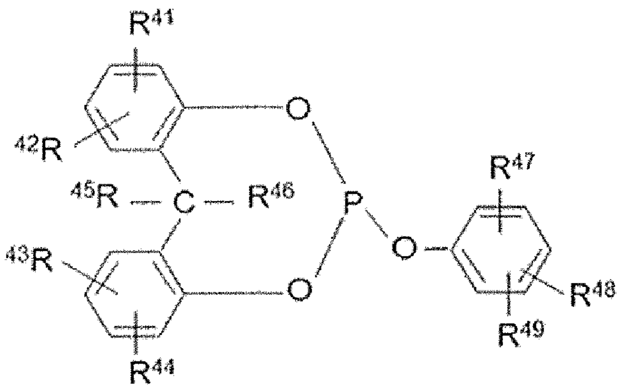

[13]

(wherein, $R^{41}$, $R^{42}$, $R^{43}$, $R^{44}$, $R^{47}$, $R^{48}$ and $R^{49}$ respectively and independently represent a hydrogen atom or alkyl group having 1 to 12 carbon atoms, cycloalkyl group, aryl group or aralkyl group, $R^{45}$ represents a hydrogen atom or alkyl group having 1 to 4 carbon atoms, and $R^{46}$ represents a hydrogen atom or methyl group).

In formula [12], $R^{36}$ and $R^{37}$ preferably represent alkyl groups having 1 to 12 carbon atoms and more preferably represent alkyl groups having 1 to 8 carbon atoms.

Specific examples of compounds represented by formula [12] include tris(dimethylphenyl) phosphite, tris(diethylphenyl) phosphite, tris(di-iso-propylphenyl) phosphite, tris(di-n-butylphenyl) phosphite, tris(2,4-di-tert-butylphenyl) phosphite, tris(2,6-di-tert-butylphenyl) phosphite and tris(2,6-di-tert-butylphenyl) phosphite. Tris(2,6-di-tert-butylphenyl) phosphite is particularly preferable.

Specific examples of compounds represented by formula [13] include phosphites derived from 2,2'-methylenebis(4,6-di-tert-butylphenol) and 2,6-di-tert-butyl phenol and phosphites derived from 2,2'-methylenebis(4,6-di-tert-butylphenol) and phenol. Phosphites derived from 2,2'-methylenebis(4,6-di-tert-butylphenol) and phenol are particularly preferable.

The content of the phosphorous-based heat stabilizer based on 100 parts by weight of the total of Component A and Component B is preferably 0.001 parts by weight to 3.0 parts by weight, more preferably 0.01 parts by weight to 2.0 parts by weight and even more preferably 0.05 parts by weight to 1.0 part by weight. If the content of the phosphorous-based heat stabilizer is less than 0.001 parts by weight, mechanical properties may not be adequately demonstrated, while if the content thereof exceeds 3.0 parts by weight, mechanical properties may not be adequately demonstrated.

(Phenol-based Heat Stabilizer)

Examples of phenol-based heat stabilizers used in the present invention typically include hindered phenol, semi-hindered phenol and less-hindered phenol compounds. Hindered phenol compounds are used more preferably from the viewpoint of formulating heat stability with respect to the polypropylene-based resin.

Specific examples of these hindered phenol compounds include vitamin E, n-octadecyl-β-(4'-hydroxy-3',5'-di-tert-butylphenyl) propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl) phenol, 3,5-di-tert-butyl-4-hydroxybenzyl phosphonate diethyl ester, 2,2'-methylenebis(4-methyl-6-tert-butylphenol), 2,2'-methylenebis(4-ethyl-6-tertbutylphenol), 4,4'-methylenebis(2,6-di-tert-butylphenol), 2,2'-methylenebis(4-methyl-6-cyclohexylphenol), 2,2'-dimethylenebis(6-α-methylbenzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl) propionate, 1,6-hexandiolbis[3-(3,5-di-tert-butyl-4-hydroxyphenyl) propionate, bis[2-tert-butyl-4-methyl-6-(3-tert-butyl-5-methyl-2-hydroxybenzyl)phenyl] terephthalate, 3,9-bis{2-[3-(3-tert-butyl-4-hydroxy-5-methylphenyl)propionyloxy]-1,1-dimethylethyl}-2,4,8,10-tetraoxyspiro[5,5] undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl) sulfide, 4,4'-dithiobis(2,6-di-tert-butylphenol), 4,4'-tri-thiobis(2,6-di-tert-butylphenol), 2,4-bis(n-octylthio)-6-(4-hydroxy-3',5'-di-tert-butylanilino)-1,3,5-triazine, N,N-hexamethylenebis-(3,5-di-tert-butyl-4-hydroxyhydrocinnamide), N,N'-bis[3-(3,5-di-tert-butyl-4-hydroxyphenyl)propionyl] hydrazine, 1,1,3-tris(2-methyl-4-hydroxy-5-tert-butylphenyl) butane, 1,3,5-trimethyl-2,4,6-tris(3,5-di-tert-butyl-4-hydroxybenzyl) benzene, tris(3,5-di-tert-butyl-4-hydroxyphenyl) isocyanurate, tris(3,5-di-tert-butyl-4-hydroxybenzyl) isocyanurate, 1,3,5-tris(4-tert-butyl-3-hydroxy-2,6-dimethylbenzyl) isocyanurate, 1,3,5-tris2[3(3,5-di-tert-butyl-4-hydroxyphenyl)propionyloxy] ethyl isocyanurate and tetrakis[methylene-3-(3',5'-di-tert-butyl-4-hydroxyphenyl)propionate] methane. These can

be used preferably.

The hindered phenol compound is more preferably n-octadecyl-β-(4'-hydroxy-3',5'-di-tert-butylphenyl) propionate, 2-tert-butyl-6-(3'-tert-butyl-5'-methyl-2'-hydroxybenzyl)-4-methylphenyl acrylate, 3,9-bis{2-[3-(3-tert-butyl-4-hydroxy-5-methylphenyl)propionyloxy]-1,1-dimethylethyl}-2,4,8, 10-tetraoxyspiro[5,5] undecane and tetrakis[methylene-3-(3',5'-di-tert-butyl-4-hydroxyphenyl)propionate] methane. n-octadecyl-β-(4'-hydroxy-3',5'-di-tert-butylphenyl) propionate is even more preferable.

(Sulfur-containing Antioxidant)

A sulfur-containing antioxidant can be used as an antioxidant in the polypropylene resin composition. This sulfur-containing antioxidant is particularly preferable in cases in which the resin composition is used in rotational molding or compression molding.

Specific examples of the sulfur-containing antioxidant include dilauryl-3,3'-thiodipropionic acid ester, ditridecyl-3,3'-thiodipropionic acid ester, dimyristyl-3,3'-thiodipropionic acid ester, distearyl-3,3'-thiodipropionic acid ester, laurylstearyl-3,3'-thiodipropionic acid ester, pentaerythritol tetra(β-laurylthiopropionate) ester, bis[2-methyl-4-(3-laurylthiopropionyloxy)-5-tert-butylphenyl] sulfide, octadecyl disulfide, mercaptobenzimidazole, 2-mercapto-6-methylbenzimidazole and 1,1-thiobis(2-naphthol). A more preferable example is pentaerythritol tetra(β-laurylthiopropionate) ester.

The aforementioned examples of phosphorous-based stabilizers, phenol-based stabilizers and sulfur-containing antioxidants can each be used alone or two more types can be used in combination. The content of phenol-based stabilizer and sulfur-containing antioxidant based on 100 parts by weight of the total of Component A and Component B is preferably 0.0001 parts by weight to 1 part by weight, more preferably 0.0005 parts by weight to 0.5 parts by weight and even more preferably 0.001 parts by weight to 0.2 parts by weight.

(Mold release agent)

Preferably, the polypropylene resin composition constituting the thermoplastic resin sheet can further comprise a mold release agent in order to improve productivity at the time of molding and suppress the distortion of a molded article. Known mold release agents may be used.

Examples of the mold release agent include saturated fatty acid esters, unsaturated fatty acid esters, polyolefin-based waxes (such as polyethylene wax, 1-alkene polymers, waxes modified by a functional group-containing compounds may also be used), silicone compounds, fluorine compounds (such as fluorine oils typified by polyfluoroalkyl ethers), paraffin wax and beeswax.

Out of these, fatty acid esters are preferred as the mold release agent. The fatty acid esters are esters of an aliphatic alcohol and an aliphatic carboxylic acid. The aliphatic alcohol may be either a monohydric alcohol or a polyhydric alcohol having 2 or more hydroxyl groups. The number of carbon atoms of the alcohol is preferably 3 to 32, and more preferably 5 to 30.

Examples of the monohydric alcohol include dodecanol, tetradecanol, hexadecanol, octadecanol, eicosanol, tetracosanol, ceryl alcohol and triacontanol.

Examples of the polyhydric alcohol include pentaerythritol, dipentaerythritol, tripentaerythritol, polyglycerol (from triglycerol to hexaglycerol), ditrimethylolpropane, xylitol, sorbitol and mannitol. In the fatty acid ester of the present invention, a polyhydric alcohol is more preferred.

On the other hand, the aliphatic carboxylic acid has preferably 3 to 32 carbon atoms, particularly preferably 10 to 22 carbon atoms.

Examples of the aliphatic carboxylic acid include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, behenic acid, icosanoic acid and docosanoic acid. Unsaturated aliphatic carboxylic acids such as palmitoleic acid, oleic acid, linoleic acid, linolenic acid, eicosenoic acid, eicosapentaenoic acid and cetoleic acid are also included. Out of these, aliphatic carboxylic acids having 14 to 20 carbon atoms are preferred. Among these, saturated aliphatic carboxylic acids are more preferred. Stearic acid and palmitic acid are particularly preferred.

Since the above aliphatic carboxylic acids such as stearic acid and palmitic acid are generally produced from natural oils and fats such as animal oils and fats typified by beef tallow and lard and vegetable oils and fats typified by palm oil and sunflower oil, they are normally mixtures containing another carboxylic acid component having a different number of carbon atoms. Therefore, even in the production of the aliphatic acid ester of the present invention, an aliphatic carboxylic acid is produced from a natural oil or fat, and therefore an aliphatic carboxylic acid in the form of a mixture containing another carboxylic acid component, especially stearic acid or palmitic acid, is preferably used.

The fatty acid ester used in the present invention may be either a partial ester or a full ester. Since the partial ester generally has a large hydroxyl value and easily triggers the decomposition of a resin at a high temperature, the

full ester is preferred. The acid value of the fatty acid ester of the present invention is preferably not more than 20, more preferably 4 to 20, much more preferably 4 to 12 from the viewpoint of heat stability. The acid value can be substantially 0. The hydroxyl value of the fatty acid ester is preferably 0.1 to 30. Further, the iodine value is preferably not more than 10. The iodine value can be substantially 0. These properties can be obtained by methods specified in JIS K 0070.

The content of the mold release agent is preferably 0.005 to 2 parts by weight, more preferably 0.01 to 1 part by weight, much more preferably 0.05 to 0.5 part by weight based on 100 parts by weight of the total of the components A and B.

(Ultraviolet Absorbent)

The polypropylene resin composition constituting the thermoplastic resin sheet of the present invention may comprise an ultraviolet absorbent.

Examples of Benzophenone-based ultraviolet absorbents include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydriderate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone and 2-hydroxy-4-methoxy-2'-carboxybenzophenone.

Examples of Benzotriazole-based ultraviolet absorbents include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one) and 2-[2-hydroxy-3-(3,4,5,6-tetrahydrophthalimidomethyl)-5-methylphenyl]benzotriazole. Polymers having a 2-hydroxyphenyl-2H-benzotriazole skeleton such as a copolymer of 2-(2'-hydroxy-5-methaeryloxyethylphenyl)-2H-benzotriazole and a vinyl-based monomer copolymerizable with that monomer and a copolymer of 2-(2'-hydroxy-5-acryloxyethylpheny)-2H-benzotriazole and a vinyl-based monomer copolymerizable with that monomer are also included.

Examples of hydroxyphenyitriazine-based ultraviolet absorbents include 2-(4,6-diphenyl-1,3,5-triazin-2-yl)-5-hexyloxyphenol, 2-(4,6-diphenyl-1,3,5 -triazin-2-yl)-5 - methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol and 2-(4,6-diphenyl-1,3,5-triazin-2-yl)-5-butyloxyphenol. Further, compounds having a 2,4-dimethylphenyl group in place of the phenyl groups of the above compounds, such as 2-(4,6-bis(2,4-dimethylphenyl)-1,3,5-triazin-2-yl)-5-hexyloxyphenol, are further included.

Examples of cyclic iminoester-based ultraviolet absorbents include 2,2'-p-phenylenebis(3,1-benzoxazin-4-one), 2,2'-(4,4'-diphenylene)bis(3,1-benzoxazin-4-one) and 2,2'-(2,6-naphthalene)bis(3,1-benzoxazin-4-one).

Examples of cyanoacrylate-based ultraviolet absorbents include 1,3-bis[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

Moreover, as a result of adopting the structure of a monomer compound capable of radical polymerization, the aforementioned ultraviolet absorber may be a polymeric ultraviolet absorber obtained by copolymerizing an ultraviolet absorbing monomer and/or light stabilizing monomer having a hindered amine structure with a monomer such as an alkyl (meth)acrylate. Preferable examples of the aforementioned ultraviolet absorbing monomer include compounds containing a benzotriazole backbone, benzophenone backbone, triazine backbone, cyclic iminoester backbone or cyanoacrylate backbone in the ester substituent of (meth)acrylic acid ester.

Among the aforementioned ultraviolet absorbers, benzotriazole-based ultraviolet absorbers and hydroxyphenyl triazine-based ultraviolet absorbers are preferable from the viewpoint of ultraviolet absorption capacity, while cyclic iminoester-based and cyanoacrylate-based ultraviolet absorbers are preferable from the viewpoint of heat resistance and hue (transparency). The aforementioned ultraviolet absorbers may be used alone or two or more types may be used as a mixture.

The content of the ultraviolet absorber based on 100 parts by weight of the total of Component A and Component B is preferably 0.01 parts by weight to 2 parts by weight, more preferably 0.02 parts by weight to 2 parts by weight, even more preferably 0.03 parts by weight to 1 part by weight and particularly preferably 0.05 parts by weight to 0.5 parts by weight.

(Hindered Amine-Based photostabilizer)

The polypropylene resin composition constituting the thermoplastic resin sheet may comprise a hindered amine-based photostabilizer. The hindered amine-based photostabilizer is generally called HALS (Hindered Amine Light Stabilizer) and has a 2,2,6,6-tetramethylpiperidine skeleton in the structure.

Examples of the hindered amine-based photostabilizer include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperldyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, bis(1,2,2,6,6-pentamethyl-4-piperidyl)carbonate, bis(1,2,2,6,6-pentamethyl-4-piperidyl)oxalate, bis(1,2,2,6,6-pentamethyl-4-piperidyl)malonate, bis(1,2,2,6,6-pentamethyl-4-piperidyl)sebacate, bis(1,2,2,6,6-pentamethyl-4-piperidyl)adipate, bis(1,2,2,6,6-pentamethyl-4-piperidyl)terephthalate, N,N'-bis-2,2,6,6-tetramethyl-4-piperidinyl-1,3-benzene dicarboxyamide, 1,2-bis(2,2,6,6-tetramethyl-4-piperidyloxy)ethane, α,α'-bis(2,2,6,6-tetramethyl-4-piperidyloxy)-p-xylene, bis(2,2,6,6-tetramethyl-4-piperidyltolyiene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate,N,N',N'',N'''-tetrakis-(4,6-bis-(butyl-(N-methyl-2,2,6,6-tetramethylpiperidin-4-yl)amino)- triazin-2-yl)-4,7-diazadecane-1,10-diamine, polycondensate of dibutylamine 1,3,5-triazine.N,N'-bis(2,2,6,6-tetramethyl-4-piperidyl)-1,6-hexamethylenediamine and N-(2,2,6,6-tetramethyl-4-piperidyl)butylamine, poly[{6-(1,1,3,3-tetramethylbutyl)amino-1,3,5-triazine-2,4-diyl}{(2,2,6,6-tetramethyl-4-piperidyl)imino} hexamethylene{(2,2,6,6-tetramethyl-4-piperidyl)imino}], tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, tris(2,2,6,6-tetramethyl-4-piperidyl)-benzene-1,3,4-tricarboxylate, 1-[2-{3-(3,5-di-t-butyl-4-hydroxyphenyl)propionyloxy}butyl]-4-[3-(3,5-di-t-butyl-4-hydroxyphenyl) propionyloxy]2,2,6,6-tetramethylpiperidine and condensate of 1,2,3,4-butane tetracarboxylic acid, 1,2,2,6,6-pentamethyl-4-piperidinol and β,β,β',β'-tetramethyl-3,9-[2,4,8,10-tetraoxaspiro(5,5) undecane]diethanol.

The hindered amine-based photostabilizers are roughly divided into three types according to a site to be bonded to a nitrogen atom in the piperidine skeleton: N-H type (hydrogen is bonded to the nitrogen atom), N-R type (an alkyl group (R) is bonded to the nitrogen atom) and N-OR type (an alkoxy group (OR) is bonded to the nitrogen atom). When it is used for the polycarbonate resin, the N-R type and N-OR type are preferably used from the viewpoint of the basicity of the hindered amine-based compound. The aforementioned hindered amine-based photostabilizer may be used alone or in combination of two or more.

The content of hindered amine-based photostabilizer based on 100 parts by weight of the total of Component A and Component B is preferably 0.05 parts by weight to 1 part by weight, more preferably 0.08 parts by weight to 0.7 parts by weight and particularly preferably 0.1 parts by weight to 0.5 parts by weight. If the content of hindered amine-based photostabilizer exceeds 1 part by weight, appearance may be defective due to the generation of gas or a decrease in physical properties may occur due to decomposition of the polycarbonate resin, thereby making this undesirable. In addition, if the content of hindered amine-based photostabilizer is less than 0.05 parts by weight, adequate light resistance may not be demonstrated.

(Flame Retardant)

Flame retardance can be imparted to the polypropylene resin composition constituting the thermoplastic resin sheet by incorporating a flame retardant. Although various types of compounds conventionally known as flame retardants of thermoplastic resins can be used for the flame retardant, (i) halogen-based flame retardants (such as brominated polycarbonate compounds), (ii) phosphorous-based flame retardants (such as monophosphate compounds, phosphate oligomer compounds, phosphonate oligomer compounds, phosphonitrile oligomer compounds, phosphonic amide compounds or phosphagene compounds), (iii) metal salt-based flame retardants (such as organic sulfonic acid alkaline (earth) metal salts, boric acid metal salt-based flame retardants or stannic acid metal salt-based flame retardants, and (iv) silicone-based flame retardants composed of silicone compounds are more preferable. Incidentally, incorporation of a compound used as a flame retardant not only improves flame retardance, but also brings about improvement of, for example, antistatic properties, fluidity, rigidity and heat stability based on the properties of each compound.

The content of flame retardant based on 100 parts by weight of the total of Component A and Component B is preferably 0.01 parts by weight to 30 parts by weight, more preferably 0.05 parts by weight to 28 parts by weight and even more preferably 0.08 parts by weight to 25 parts by weight. If the content of flame retardant is less than 0.01 parts by weight, adequate flame retardance may not be obtained, while if the content thereof exceeds 30 parts by weight, there may be large decreases in impact strength and chemical resistance.

(Dyes)

The polypropylene resin composition constituting the thermoplastic resin sheet may further comprise various types of dyes in order to provide a molded article demonstrating various designs. Favorable design effects taking advantage of luminescent color can be imparted by incorporating fluorescent whitening agents or other fluorescent dyes that emit light. In addition, a fiber-reinforced polypropylene resin composition can also be provided that is colored with trace amounts of dyes while also having vivid color development.

Examples of fluorescent dyes (including fluorescent whitening agents) include coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, thiazine-based fluorescent dyes and diaminostilbene-based fluorescent dyes. Among these, coumarin-based fluorescent dyes, benzopyran-based fluorescent dyes and perylene-based fluorescent dyes are preferable due to their favorable heat resistance, and little deterioration during molding processing of the polycarbonate resin.

Examples of dyes other than the aforementioned bluing agents and fluorescent dyes include perylene-based dyes, coumarin-based dyes, thioindigo-based dyes, anthraquinone-based dyes, thioxanthone-based dyes, ferrocyanides such as Prussian blue, perinone-based dyes, quinoline-based dyes, quinacridone-based dyes, dioxazine-based dyes, isoindolinone-based dyes and phthalocyanine-based dyes. Moreover, the resin composition of the present invention also allows the obtaining of more favorable metallic color by incorporating a metallic dye. Various types of plate-like fillers having a metal coating or metal oxide coating are preferable for the metallic dye.

The content of the aforementioned dye based on 100 parts by weight of the total of Component A and Component B is preferably 0.00001 parts by weight to 1 part by weight and more preferably 0.00005 parts by weight to 0.5 parts by weight.

(Other Resins)

A small proportion of other resins can be used in the polypropylene resin composition constituting the thermoplastic resin sheet within a range that demonstrates the effects of the present invention.

Examples of these resins include polyester resins such as polyethylene terephthalate or polybutylene terephthalate, polyamide resins, polyimide resins, polyether imide resins, polyurethane resins, silicone resins, polyphenylene ether resins, polyphenylene sulfide resins, polysulfone resins, polyolefin resins other than polypropylene resins, polymethacrylate resins, phenol resins and epoxy resins.

(Other Fillers)

A small proportion of other fillers can be used in the polypropylene resin composition constituting the thermoplastic resin sheet within a range that demonstrates the effects of the present invention.

Examples of these fillers include fibrous fillers such as potassium titanate whiskers, zinc oxide whiskers, alumina fibers, silicon carbide fillers, ceramic fibers, asbestos fibers, gypsum fibers or metal fibers, and silicates such as wollastonite, sericite, kaolin, mica, clay, bentonite, asbestos, talc or alumina silicate. In addition, other examples include swellable layered silicates such as montmorillonite or synthetic mica, metal compounds such as alumina, silicon oxide, magnesium oxide, zirconia oxide, titanium oxide or iron oxide, carbonates such as calcium carbonate, magnesium carbonate or dolomite, sulfates such as calcium sulfate or barium sulfate and non-fibrous fillers such as glass beads, ceramic beads, boron nitride, silicon carbide, calcium phosphate and silica.

(Other Additives)

Other additives that are known per se can be incorporated at a small proportion in the polypropylene resin composition constituting the thermoplastic resin sheet of the present invention in order to impart various functions and improve characteristics of molded articles. These additives can be incorporated in an ordinary amount provided they do not impair the object of the present invention. Examples of these additives include sliding agents (such as PTFE particles), fluorescent dyes, inorganic fluorescent substances (such as fluorescent substances using aluminates for the crystal matrix), antistatic agents, nucleating agents, inorganic and organic antimicrobial agents, photocatalyst-based antifouling agents (such as fine particle titanium oxide or fine particle zinc oxide), radical generators, infrared absorbers (heat ray absorbers) and photochromic agents.

(Method for Producing Polypropylene Resin Composition)

There are no particular limitations on the method used to produce the polypropylene resin composition constituting the thermoplastic resin sheet and a commonly known method can be used. An example thereof consists of mixing each component in a liquid state and then evaporating the solvent or precipitating each component in the solvent. A method consisting of kneading each component in a molten state is preferable from an industrial viewpoint. Commonly used single screw or twin screw extruders or various types of kneaders or other kneading devices can be used for melting and kneading. A twin screw high pressure kneader is particularly preferable. During melting and kneading, the set cylinder temperature of the kneading device is preferably within the range of 200°C to 360°C, more preferably within the range of 200°C to 300°C and even more preferably within the range of 230°C to 280°C. During kneading, each component may be uniformly mixed in advance with a device such as a tumbler or Henschel mixer, or as necessary, a method can be used in which a certain amount of each component is supplied separately in the kneading device while omitting mixing.

(Thermoplastic Resin Sheet)

The thermoplastic resin sheet used in the present invention is superimposed with a reinforcing resin sheet and subjected to pressure treatment at a temperature equal to or higher than the melting temperature of the thermoplastic resin constituting the thermoplastic resin sheet and lower than the heat resistant temperature of the reinforcing fibers constituting the reinforcing fiber sheet, resulting in melting of the thermoplastic resin sheet and its arrangement around the reinforcing fibers without gaps to obtain a fiber-reinforced resin composite.

Although there are no particular limitations on the shape of the thermoplastic resin sheet used in the present invention, provided it is formed of mesh-like hollow fibers, in order to achieve the aforementioned object, at least one of the three dimensions of length, width and thickness is preferably within the range of 1 μm to 300 μm, more preferably within the range of 1 μm to 100 μm, even more preferably within the range of 1 μm to 50 μm and most preferably within the range of 1 μm to 30 μm. A mesh-like fiber sheet is used from the viewpoint of impregnability of the thermoplastic resin sheet around the reinforcing fibers.

(Mesh-like Fiber Sheet)

In the present invention, higher adhesiveness with the reinforcing fibers is obtained by using a mesh-like fiber sheet for the thermoplastic resin sheet compared with a normal nonwoven fabric made of fibers not having a mesh structure. Deformed fibers, in which the cross-sectional shape of hollow fibers is that of an irregular non-circular cross-section, are preferable in terms of obtaining higher adhesiveness with the reinforcing fibers. Incidentally, hollow fibers refer not only to those having well-defined voids in the manner of commonly known hollow fibers, but also to those that are hollow to a degree that air bubbles are present within the fibers.

Hollow fibers as described in the present invention contain air bubbles within fibers. Hollow fibers as described in the present invention are preferably a fibrous material that has discontinuous air bubbles within and an irregular non-circular cross-section as schematically shown in FIG. 1, for example.

More specifically, as shown in the photomicrograph of FIG. 2, the hollow fibers are preferably a fibrous material that has a plurality of air bubbles each of different shapes there within and has a flat shape.

Incidentally, air bubbles within the deformed fibers as referred to here refer to enclosed spaces (voids) present within the fibers. Normally, voids within synthetic fibers are voids having the same continuous cross-sectional shape in the direction of the fiber axis as observed in hollow fibers and the like. Contrary to this, the preferable voids of the present invention are in the form of discontinuous air bubbles. In the present invention, these air bubbles that are discontinuous and have cross-sections of different shapes in the lengthwise direction of the fibers are preferably present within hollow fibers. In the case there are voids of the preferable shape of the present invention in the form of discontinuous air bubbles, differing from the case of ordinary continuous voids, fluidity of the thermoplastic resin can be uniformly improved. As a result, in comparison with continuous voids, superior impregnability in particular can be demonstrated when compounding with reinforcing fibers.

Although the thermoplastic resin fibers used in the present invention have air bubbles within the fibers as described above, the hollow ratio of a transverse cross-section of a single fiber is preferably within the range of 0.5% to 40%. Here, hollow ratio refers to the ratio of total area of the area of air bubbles in a fiber cross-section in the case the fiber cross-section contains a plurality of air bubbles. Moreover, the hollow ratio of the fibers is more preferably within the range of 1% to 30% and particularly preferably within the range of 5% to 20%. In the case the fiber hollow ratio is less than 0.5%, impregnability during compounding with the reinforcing fibers may be inadequate, while in the case the hollow ratio exceeds 40%, in addition to the strength of the nonwoven fabric structure decreasing, there is frequent occurrence of fiber shredding in a production step of the fibers such as during spinning, especially when they are deformed fibers, and production efficiency tends to decrease.

Incidentally, this hollow ratio is determined from a photograph of a fiber cross-section of an image obtained with a scanning electron microscope (SEM) at a magnification factor of 100X by defining the area of the hollow portions of the fibers with respect to the total cross-sectional area containing the hollow portions as the hollow ratio. In the present invention, the presence of such hollow portions results in a reduction in thickness of the wall of the fiber cross-sections, thereby causing the walls to be easily dissolved resulting in improved moldability with respect to small portions in particular. However, if the fiber hollow ratio is excessively large, thermal conductivity of the hollow fibers overall tends to decrease resulting in decreased molding efficiency.

In addition, the size of individual air bubbles is preferably within the range of 0.1 μm to 100 μm and particularly preferably within the range of 0.5 μm to 50 μm. If the size of the air bubbles is smaller than 0.1 μm, impregnability during compounding with the reinforcing fibers may be inadequate, while if the size exceeds 100 μm, not only does compounding with the reinforcing fibers not occur uniformly, but defects (air bubbles) may end up remaining within fiber-reinforced plastic.

Although deformed fibers are preferably used in the present invention, irregular non-circular cross-sections present in outer peripheral cross-sections of the deformed fibers preferably have a shape in which there is disorder in the shape of the cross-sections to a greater extent than in regularly shaped cross-sections such as oval or regular polygonal cross-sections. Since the cross-sectional shape of ordinary synthetic fibers is dependent on the shape of the spinneret, the resulting cross-section typically has a regular shape. This is because the incidence of thread breakage increases during melt spinning in the case of irregularly shaped spinnerets. However, in the case where the deformed cross-sections have a regular shape, the fibers fit into the deformed portions of other fibers when composing a nonwoven fabric, resulting in the accumulation and close packing of the fibers, thereby conversely causing a reduction in the number of voids. The mesh-like fibers of the present invention differ from that described above in that they are preferably fibers having a cross-sectional shape that has a deformed shape and that is not dependent on the shape of the spinneret. The fibers constituting the thermoplastic resin sheet of the present invention are preferably deformed fibers obtained by slit spinning using a foaming agent, for example, as is subsequently described.

As a result of having an irregularly shaped outer peripheral cross-section or mesh-like shape in this manner, not only do voids always form at those portions where each irregularly shaped fiber overlaps, but the voids between fibers take on various shapes. The voids between fibers are not uniform and fiber overlapping decreases. In addition, bending rigidity and material density become random as a result of having an irregular shape. As a result of these properties becoming random, the resulting fibers can be made to have uniform mechanical properties when compounding with the reinforcing fibers.

The deformed fibers preferably used in the present invention preferably have a degree of deformation of greater than 1 to 20 or less, and more preferably a degree of deformation of 2 to 10, in the transverse cross-section of a single fiber. Here, the degree of deformation of the shape of a fiber cross-section refers to a value defined by the ratio D1/D2 of the circumscribed circle diameter D1 to the inscribed circle diameter D2 of a single fiber transverse cross-section as shown in FIG. 3. In the case this degree of deformation is within the aforementioned preferable ranges, superior impregnability can be demonstrated during compounding with the reinforcing fibers. More specifically, this degree of deformation is determined from a fiber cross-sectional photograph of an image obtained with a scanning electron microscope (SEM) at a magnification factor of 100X in the same manner as the aforementioned measurement of hollow ratio, and the circumscribed circle diameter D1 and the inscribed circle diameter D2 in a fiber cross-section are measured followed by calculating the ratio thereof (D1/D2) as the degree of deformation. In contrast to end face angle, increasing this value of the degree of deformation facilitates the entry of hollow fibers composed of thermoplastic resin between the reinforcing fibers, thereby making it possible to ensure higher impregnability.

These mesh-like hollow fibers can be obtained by, for example, blowing in high-pressure air during spinning of melt blown fibers to obtain hollow fibers followed by collecting the melt blown fibers on a mesh screen to obtain a nonwoven fabric and give the resulting fabric a mesh-like form.

Here, melt blown fibers are those composed of a thermoplastic resin as previously described. A nonwoven fabric can be obtained by collecting these melt blown fibers on a mesh screen. The melt blown fibers are collected uniformly and at high density in the form of a flat shape on the collecting surface of the mesh screen and the like, thereby resulting in a thermoplastic resin sheet such as a nonwoven fabric. This nonwoven fabric composed of melt blown fibers differs from short fiber nonwoven fabric that has been three-dimensionally interlaced in the manner of typical needle punching in that it is a long fiber nonwoven fabric in the form of a two-dimensionally arranged mesh. Despite the low interlace density, the resulting sheet has high strength and superior conformance to a mold when used in the form of a laminate. This melt blown nonwoven fabric composed of long fibers is preferably used in the present invention and offers the advantage of facilitating the obtaining of a high-density nonwoven fabric due to the low number of fibers arranged in the direction of thickness.

Since these melt blown fibers in the form of mesh-like hollow fibers obtained by high-pressure air flow are composed of fibers in an unstretched state that have been subjected to hardly any stretching, the resulting thermoplastic resin sheet has superior processability and a laminate obtained by laminating these sheets also has superior processability. These mesh-like hollow fibers contain numerous non-oriented portions and soften at comparatively low temperatures. Consequently, by subjecting to heat and pressure processing (molding processing) at a temperature equal to or lower than the heat resistant temperature of the reinforcing fibers, non-oriented portions of the mesh-like hollow fibers soften and adhere despite not containing a binder component in particular, thereby making it possible to demonstrate superior moldability.

The fiber diameter of the hollow fibers used in the present invention is preferably 10 μm or more, and the average value thereof is preferably within the range of 10 μm to 300 μm and particularly preferably within the range of 50 μm to 250 μm. This fiber diameter can be measured easily from an image obtained with a microscope. Although in general melt blown fibers of greater fineness are frequently used, in the present invention, a fiber diameter within the aforementioned ranges is used preferably in order to obtain a laminate having superior mold conformance and superior moldability during heat processing. Incidentally, this fiber diameter of melt blown fibers can be adjusted according to the nozzle diameter and discharge quantity of the spinnerets.

Moreover, the following provides a detailed description of the method used to produce the optimum melt blown fibers for use as the mesh-like hollow fibers used in the present invention.

Here, melt blown fibers refer to fibers obtained by, for example, melt spinning a thermoplastic polymer while emitting a high-speed heated air flow directly below the nozzles of the spinnerets for thinning.

A nonwoven fabric composed of melt blown fibers preferably used in the present invention refers to that which can be obtained by collecting melt blown fibers composed of a thermoplastic resin as previously described on a mesh screen. Since this melt blown nonwoven fabric is uniformly accumulated on a collecting surface such as a mesh screen in the form of a flat shape and at high density, it is suitable for a thermoplastic resin sheet for a laminate. In the nonwoven fabric composed of melt blown fibers, required strength can be obtained with respect to the planar direction despite the comparatively low interlace density. This is because, in contrast to short fiber nonwoven fabric that has been three-dimensionally interlaced in the manner of typical needle punching, the nonwoven fabric composed of melt blown fibers is a long fiber nonwoven fabric in which the fibers are highly arranged in two-dimensional directions. In addition, this melt blown nonwoven fabric composed of long fibers easily allows the obtaining of a high density nonwoven fabric since there are few fibers arranged in the direction of thickness, thereby resulting in essentially superior resin impregnability.

The melt blown fibers preferably used in the present invention become mesh-like fibers due to a high-pressure air flow and are preferably composed of fibers in an unstretched state that have been subjected to hardly any stretching. Thus, since these fibers contain numerous non-oriented portions and soften even at comparatively low temperatures, binder-free type of sheet-like material in which the non-oriented portions are softened and adhered is easily obtained despite not containing a binder component, by subjecting to embossing processing at a temperature equal to or higher than the glass transition temperature.

(Reinforcing Fiber Sheet)

The reinforcing fibers constituting the reinforcing fiber sheet used in the laminate of the present invention are preferably reinforcing fibers having heat resistance of 350°C or higher.

More specifically, high strength carbon fibers, glass fibers, metal fibers or other inorganic fibers or synthetic organic fibers such as aromatic polyamide fibers can be used. Moreover, these fibers may be used alone or two or more types may be used in combination. Examples of metal fibers include stainless steel fibers and these fibers are preferable in terms of electrical conductivity and mechanical properties. In addition, the surface of the reinforcing fibers may be coated or deposited with a metal and the like. For example, nickel-coated carbon fibers are preferable in terms of electrical conductivity. Carbon fibers having high strength and high elastic modulus and glass fibers are particularly preferable, and carbon fibers are used to obtain a laminate having high rigidity, specific examples of which include polyacrylonitrile (PAN)-based, petroleum- or coal pitch-based, rayon-based and lignin-based carbon fibers. PAN-based carbon fibers using PAN for the raw material thereof are particularly preferable since they demonstrate superior productivity and mechanical properties on an industrial scale.

In addition, the reinforcing fibers used in the present invention are only required to have a fibrous shape that is long in a single direction and the concept thereof includes not only ordinary fibers and filaments, but also so-called whiskers and the like.

Specific examples of reinforcing fibers preferably used in the present invention include fibrous materials composed of inorganic filler such as glass fibers, glass fibers having a flat cross-section, carbon fibers, metal fibers, asbestos, rock wool, ceramic fibers, slag fibers, potassium titanate whiskers, boron whiskers, aluminum borate whiskers, calcium carbonate whiskers, titanium oxide whiskers, wollastonite, zonotrite, palygorskite (attapulgite) or sepiolite, heat-resistant organic fibers represented by heat-resistant organic fibers such as aramid fibers, polyimide fibers, poly(paraphenylene benzoxazole) (PBO) fibers or polybenzothiazole fibers and fibers obtained by coating the surface of these fibers with, for example, a different type of material such as metal or metal oxide.

Fibers having a surface coated with a different type of material are only required to be in a fibrous form, and

examples thereof include metal-coated glass fibers, metal-coated glass flakes, titanium oxide-coated glass flakes and metal-coated carbon fibers. There are no particular limitations on the method used to coat the surface with a different type of material, and examples thereof include various types of known coating methods (such as electrolytic plating, electroless plating or hot dip plating), vacuum deposition, ion plating, CVD (such as thermal CVD, MOCVD or plasma CVD), PVD and sputtering.

Among these reinforcing fibers, one type selected from glass fibers, carbon fibers and aramid fibers is particularly preferable. In addition, only one type or a plurality of types of these reinforcing fibers may be used.

The thickness, or so-called fineness, of the reinforcing fibers is preferably such that fibers are used having an average diameter of 3 μm to 20 μm and more preferably 5 μm to 15 μm. If average diameter is within these ranges, not only do the fibers demonstrate high levels of physical properties, but also demonstrate superior dispersibility even in the thermoplastic resin ultimately used for the matrix. In addition, the reinforcing fibers are preferably in the form of fiber bundles having 1000 to 50,000 single fibers from the viewpoint of productivity.

In addition, the reinforcing fibers used in the laminate of the present invention preferably have high strength in order to ultimately reinforce the resin, and the tensile strength of the fibers is preferably 3500 MPa to 7000 MPa while the modulus thereof is preferably 220 GPa to 900 GPa. The reinforcing fibers are preferably carbon fibers and more preferably PAN-based carbon fibers from the viewpoint of ultimately obtaining molded articles having high strength.

The surface of the carbon fibers is preferably subjected to oxidation treatment for the purpose of enhancing compatibility with the matrix resin and improving dispersibility of polypropylene resin and polycarbonate resin. Although the mechanism responsible for this is unclear, subjecting the surface of carbon fibers to oxidation treatment improves surface polarity thereby further decreasing adhesiveness between nonpolar propylene resin and the carbon fibers. As a result, adhesiveness with polycarbonate resin having relatively high polarity is thought to improve.

The degree of oxidation treatment can be quantified by the surface oxygen concentration (O/C) on the carbon fibers. The surface oxygen concentration (O/C) on the carbon fibers is preferably such that the surface oxygen concentration (O/C), which is the ratio of the number of atoms of oxygen (O) to the number of atoms of carbon (C) on the fiber surface as measured by X-ray photoelectron spectroscopy, is preferably 0.15 or more, more preferably 0.18 or more and even more preferably 0.2 or more. In the case the surface oxygen concentration is less than 0.15, adhesiveness between the carbon fibers and polycarbonate resin may be inadequate, thereby making this undesirable. Incidentally, although there are no particular limitations on the upper limit of surface oxygen concentration, typically it is preferably 0.5 or less in consideration of the balance between handling ease of the carbon fibers and productivity.

Although there are no particular limitations on the oxidation treatment method, preferable examples thereof include: (1) a method consisting of treating the carbon fibers with acid or alkali or a salt thereof, or with an oxidizing gas, (2) a method consisting of firing fibers or a fibrous carbon filler which can be processed into carbon fibers at a temperature of 700°C or higher in the presence of an inert gas containing an oxygen-containing compound, and (3) a method consisting of subjecting the carbon fibers to oxidation treatment followed by subjecting to heat treatment in the presence of an inert gas.

These reinforcing fibers can be used in the form of long fibers or short fibers in a laminate. However, the reinforcing fibers are preferably in the form of long fibers from the viewpoint of resin reinforcement. Conversely, from the viewpoint of obtaining isotropic physical properties of the resulting composite, the reinforcing fibers are preferably mainly composed of short fibers. Here, short fibers refer to discontinuous fibers that are not long fibers. In the case of using the reinforcing fibers in the form of short fibers, the reinforcing fiber sheet is preferably a fiber composite or nonwoven fabric in which the fibers have been randomly oriented in advance.

In addition, in the case of using the reinforcing fibers in the form of short fibers (discontinuous fibers), the length thereof is preferably 300 μm or more, more preferably 3 mm or more, even more preferably 6 mm or more and most preferably 20 mm or more. In addition, in the case of using in the form of short fibers, the length thereof is preferably 100 mm or less, more preferably 80 mm or less and particularly preferably 60 mm or less. In the case of using such fibers in the form of a nonwoven fabric, anisotropy is improved with respect to strength and dimensions.

On the other hand, in the case of using the reinforcing fibers in the form of long fibers, the reinforcing fibers can be used in various forms such as a unidirectional sheet, woven fabric, knit fabric or braid. However, use in the form of a unidirectional sheet (so-called UD sheet) is preferable from the viewpoint of reinforcing the strength of the ultimately obtained composite. Alternatively, all or a portion of the reinforcing fibers is in the form of a unidirectional fiber sheet or unidirectional tape, and these are preferably used partially. A particularly preferable form in the case of using in the form of long fibers is a biaxial or triaxial woven fabric. Moreover, one type of these fiber forms or the combination of two more types of these forms can be used partially.

The content of reinforcing fibers constituting the reinforcing fiber sheet used in the present invention based on 100 parts by weight of the total of Component A and Component B is 20 parts by weight to 150 parts by weight, preferably 40 parts by weight to 150 parts by weight, more preferably 60 parts by weight to 150 parts by weight and even more preferably 80 parts by weight to 150 parts by weight. If the content of reinforcing fibers is less than 20 parts by weight, strength of the fiber-reinforced resin composite is not adequately demonstrated, while if the content thereof exceeds

150 parts by weight, a large number of reinforcing fibers slip down resulting in uneven strength and making this undesirable.

(Lamination Method)

Moreover, the laminate of the present invention can be used to obtain a fiber-reinforced resin composite by superimposing a thermoplastic resin sheet and reinforcing fiber sheet such as previously described, followed by subjecting to pressure treatment at a temperature equal to or higher than the melting temperature of the thermoplastic resin constituting the thermoplastic resin sheet but lower than the heat resistant temperature of the reinforcing fibers constituting the reinforcing fiber sheet.

The weight ratio of the thermoplastic resin sheet to the reinforcing fiber sheet is preferably within the range of 90:10 to 30:70 and more preferably within the range of 70:30 to 40:60. The thickness of the thermoplastic resin sheet under conditions of a load of 1.25 $N/cm^2$ when measured using a Peacock probe having a diameter of 8 mm is preferably 0.05 mm to 0.5 mm and more preferably 0.1 mm to 0.3 mm, and the basis weight thereof is preferably within the range of 2 $g/m^2$ to 100 $g/m^2$. The reinforcing fiber sheet is preferably such that the thickness thereof is within the range of 0.05 mm to 1.0 mm and the basis weight is preferably within the range of 100 $g/m^2$ to 2000 $g/m^2$.

The laminate of the present invention is preferably obtained by superimposing a plurality of these thin thermoplastic resin sheets and reinforcing fiber sheets. They are preferably superimposed so as to be alternately arranged and furthermore so that the thermoplastic resin sheets are arranged on the outermost surfaces on the front and back. The number of reinforcing fiber sheets is preferably 1 to 5, more preferably 1 to 3 and even more preferably 1 to 2. FIG. 4 shows a schematic diagram of a cross-sectional view of the laminate of the present invention. Reference symbol 5 in FIG. 4 indicates the thermoplastic resin sheet and reference symbol 6 indicates the reinforcing fiber sheet.

<Fiber-Reinforced Resin Composite>

The fiber-reinforced resin composite of the present invention is formed of the aforementioned laminate of the present invention. The fiber-reinforced resin composite of the present invention is obtained by subjecting the laminate to pressure treatment, and has a structure in which reinforcing fiber sheets are superimposed with the thermoplastic resin sheet interposed there between. Although the thermoplastic resin sheet of the laminate is partially impregnated into the reinforcing fiber sheet, it basically has the same cross-sectional shape as the laminate. FIG. 5 shows a schematic diagram of a cross-section of the fiber-reinforced resin composite of the present invention. In FIG. 5, reference symbol 5 indicates the layer of the thermoplastic resin sheet and reference symbol 6 indicates the layer of the reinforcing fiber sheet.

<Method for Producing Fiber-Reinforced Resin Composite>

The fiber-reinforced resin composite of the present invention is obtained by subjecting the laminate of the present invention to pressure treatment. More specifically, it can be produced by subjecting the aforementioned laminate to pressure treatment at a temperature equal to or higher than the melting temperature of the thermoplastic resin constituting the thermoplastic resin sheet and lower than the heat resistant temperature of the reinforcing fibers constituting the reinforcing fiber sheet.

With this method, the periphery of the reinforcing fibers is surrounded by thermoplastic resin. Preferably, voids are not present in order to improve the physical properties of the composite. Although varying according to the thermoplastic resin used, the temperature of pressure treatment is preferably within the range of 200°C to 340°C and more preferably within the range of 240°C to 330°C. Treatment time is preferably within the range of about 1 minute to 30 minutes, more preferably within the range of about 1 minute to 10 minutes and particularly preferably within the range of 3 minutes to 10 minutes. The pressing pressure used during pressure treatment is preferably within the range of 2 MPa to 30 MPa and more preferably within the range of 5 MPa to 20 MPa.

EXAMPLES

Although those aspects of the present invention currently thought to be optimal by the inventors of the present invention encompass the preferable range of each of the aforementioned requirements, the following examples provides a description of typical examples thereof. The present invention is naturally not limited to these aspects.

Although the following provides a detailed description of examples and comparative examples of the present invention, the present invention is not limited thereto. Each of the measured parameters used in the examples were measured using the methods described below.

(I) Evaluation of Thermoplastic Resin Sheet

(I-1) Basis Weight (Case of Fibrous Sheet)

Basis weight was measured in compliance with JIS L 1913.

(1-2) Degree of Deformation (Case of Fibrous Sheet)

The ratio (D1/D2) of the circumscribed circle diameter D1 to the inscribed circle diameter D2 of the single fiber transverse cross-section shown in FIG. 3 was calculated and taken to be the degree of deformation. Incidentally, the degree of deformation was represented by the average value of the degrees of deformation of 20 fibers.

(1-3) Hollow Ratio (Case of Fibrous Sheet)

The cross-sectional area of the fibers (including hollow portions) and the area of the hollow portions were measured in digitalized photographs of fiber cross-sections using the PIAS-2 Image Analysis System (Pias Corp.) followed by calculating the hollow ratio (%) from the ratio of these areas. Incidentally, hollow ratio was represented as the average value of the hollow ratios of 20 fibers.

(1-4) Average Thickness (Case of Film-like Sheet)

Thickness was measured under conditions of a load of 1.25 N/cm$^2$ when measured using a Peacock probe having a diameter of 8 mm. Incidentally, thickness was determined by measuring at three points on the film consisting of both ends and the center, and taking the average value thereof to be the average thickness.

(II) Evaluation of Laminate and Fiber-Reinforced Resin Composite

(II-1) Molding Processability

Molding processability was evaluated when laminates obtained in the examples and comparative examples were inserted into a preheated hot press and fiber-reinforced resin composites were molded under conditions of a temperature of 250°C and pressing time of 10 minutes and at a pressing pressure of 15 MPa. Molding processability was evaluated based on the following criteria.

Good: Molded articles obtained having favorable external appearance without generating gas during molding

Moderate: Some generation of gas during molding but no effect on external appearance

Poor: Molded articles obtained having poor external appearance with large amount of gas generated during molding

(II-2) Number of Voids

Laminates obtained in the examples and comparative examples were inserted into a preheated hot press and fiber-reinforced resin composites were obtained under the conditions (temperature, pressing time, pressing pressure) indicated in Tables 3 to 5. Cross-sections of the resulting fiber-reinforced resin composites were observed with a scanning electron microscope (SEM, JEOL Corp., JSM-6100) at a magnification factor of 100X followed by evaluating the number of voids based on the number of air bubbles in each cross-section. Air bubbles were counted when the size thereof was larger than the diameter of the reinforcing fibers and a count of 3 or less was judged to indicate favorable impregnability of resin into the reinforcing fibers.

(II-3) Flexural Modulus

Laminates obtained in the examples and comparative examples were inserted into a preheated hot press and fiber-reinforced resin composites were obtained under the conditions (temperature, pressing time, pressing pressure) indicated in Tables 3 to 5. Pieces measuring 80 mm in length and 10 mm in width were cut out from the resulting fiber-reinforced resin composites and used as sample pieces followed by measurement of flexural modulus in compliance with ISO 178 (measurement conditions: testing speed: 2 mm/min, testing temperature: 23°C). Incidentally, the sample pieces were cut out in two directions so as to be mutually perpendicular, and flexural modulus was evaluated by taking

the average value of flexural modulus in those two directions.

(II-4) Bending Strength

Sample pieces were prepared from laminates obtained in the examples and comparative examples using the same method as section (II-2) followed by measurement of bending strength in compliance with ISO 178 (measurement conditions: testing speed: 2mm/min, testing temperature: 23°C). Incidentally, the sample pieces were cut out in two directions so as to be mutually perpendicular, and bending strength was evaluated by taking the average value of bending strength in those two directions.

(II-5) Heat Stability

Sample pieces were prepared from laminates obtained in the examples and comparative examples using the same method as section (II-2), and after subjecting to treatment for 100 hours under conditions of a temperature of 60°C and humidity of 95% RH, bending strength was measured in compliance with ISO178 (measurement conditions: testing speed: 2 mm/min, testing temperature: 23°C). Heat stability was evaluated based on retention rate as determined according to the following equation.

$$\text{Retention rate (\%)} = [FS1/FS2] \times 100$$

FS1: Bending strength after wet heat treatment

FS2: Bending strength before wet heat treatment

Good: Retention rate of 80% or more

Moderate: Retention rate of 60% to less than 80%

Poor: Retention rate of less than 60%

(II-6) Chemical Resistance

After preparing sample pieces from laminates obtained in the examples and comparative examples using the same method as section (II-2) and immersing the pieces for 12 hours in a solvent (acetone) at 23°C, the sample pieces were removed from the solvent and solvent adhered to the test pieces was allowed to soak into a rag. The surface of the immersed test piece was observed visually and that for which external abnormalities were not observed was evaluated as Good while that for which external abnormalities were observed was evaluated as Poor.

[Components Used]

The following components were used in the examples.

(Component A) (Polypropylene Resin)

A-1: Homopolypropylene resin (Prime Polymer Co., Ltd., Prime Polypro J105G, MFR (230°C, 2.16 kg load): 9 g/10 min)
A-2: Homopolypropylene resin (Prime Polymer Co., Ltd., Prime Polypro J106G, MFR (230°C, 2.16 kg load): 15 g/10 min)

(Component B) (Polycarbonate Resin)

B-1: Polycarbonate resin composed of 2,2-bis(4-hydroxyphenyl) propane as monomer component (MVR (300°C, 1.2 kg load): 19 $cm^3$/10 min)

B-2: Polycarbonate resin composed of 2,2-bis(4-hydroxyphenyl) propane as monomer component (MVR (300°C, 1.2 kg load): 8.5 $cm^3$/10 min)

B-3: Copolymer polycarbonate resin composed of 2,2-bis(4-hydroxyphenyl) propane and poly(diorganosiloxane) compound (average number of repetitions (p) in formula: approx. 37) represented by the following formula [14] as monomer components (MVR (300°C, 1.2 kg load): 5.5 $cm^3$/10 min, content of poly(diorganosiloxane) component: 8.2%)

[Chem. 15]

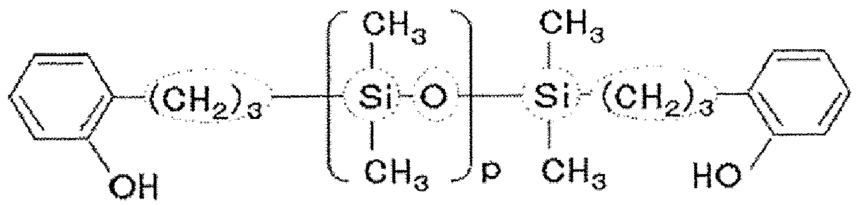

〔1 4〕

B-4: Copolymer polycarbonate resin composed of 2,2-bis(4-hydroxyphenyl) propane (Bis-A, Honshu Chemical Industry Co., Ltd.) and 2,2-bis(4-hydroxy-3-methylphenyl) propane (Bis-C, Honshu Chemical Industry Co., Ltd.) as monomer components (MVR (300°C, 1.2 kg load): 22.2 $cm^3$/10 min, Bis-A/Bis-C = 50/50)

B-5: Polycarbonate resin having branched structure composed of 2,2-bis(4-hydroxyphenyl) propane and trifunctional phenol in the form of 1,1,1-tris(4-hydroxyphenyl) ethane as monomer components (MVR (300°C, 1.2 kg load): 6 $cm^3$/10 min, trifunctional phenol content: 1 mol%)

(Component C: Modified Polyolefin Resin)

C-1: Copolymer of maleic anhydride and α-olefin in the form of an acid-modified olefin wax (Mitsubishi Chemical Corp., Diacalna DC30M (trade name))

C-2: Copolymer of maleic acid and polypropylene in the form of a modified polypropylene resin (Mitsubishi Chemical Corp., Modic P908 (trade name))

(Component D: Styrene-Based Thermoplastic Elastomer)

D-1: Styrene-ethylene-propylene-styrene block copolymer (styrene content: 65% by weight, MFR: 0.4 g/10 min, Kuraray Co., Ltd., Septon 2104 (trade name))

(Reinforcing Fiber)

FI-1: Carbon fiber unidirectional tape (Toho Tenax Co., Ltd., F-22, fiber diameter: 7 μm)

FI-2: Carbon fiber woven fabric (Toho Tenax Co., Ltd., W3101, basis weight: 200 g/$m^2$, thickness: 0.25 mm, fiber diameter: 7 μm)

FI-3: Nickel-coated carbon fiber tape (Toho Tenax Co., Ltd., HTS40 MC, fiber diameter: 7.5 μm, width: 10 mm)

FI-4: Glass fiber woven fabric (Nitto Boseki Co., Ltd., WF150, basis weight: 144 g/$m^2$, thickness: 0.22 mm, fiber diameter: 13 μm)

FI-5: Aramid fiber nonwoven fabric (Teijin Co., Ltd., Technora EF200, basis weight: 200 g/$m^2$, fiber diameter: 12 μm)

FI-6: Carbon fiber sheet (Toho Tenax Co., Ltd., HT C422 6 mm, formed into sheet having width of 300 mm and length of 300 mm by pressing carbon fibers having a long diameter of 7 μm and cut length of 6 mm)

[Production Examples 1 to 16] (Production of Sheet composed of Thermoplastic Resin Fibers)

The polypropylene resin compositions described in Tables 1 and 2 were dried with a hot air circulating dryer for 5 hours at 80°C followed by melting and mixing in a foaming agent in the form of nitrogen gas (nitrogen sealing pressure: 3 MPa), extruding from a twin-screw extruder at the extrusion temperatures described in the tables, taking up at the spinning speeds described in the tables while cooling at the die outlet, and winding up in the form of a hollow mesh-like fiber sheet. Evaluations of these hollow mesh-like fiber sheets are shown in Tables 1 and 2.

[Production Examples 17 to 19] (Production of Thermoplastic Resin Sheet (Film))

Each polypropylene resin composition described in Table 2 was dried with a hot air circulating dryer for 5 hours at 80°C followed by extruding from a twin-screw extruder at the extrusion temperatures described in the tables to prepare thermoplastic resin film-like sheets having the thicknesses described in the tables while cooling at the die outlet. Evaluations of these film-like sheets are shown in Table 2.

[Examples 1 to 26 and Comparative Examples 1 to 6]

Reinforcing fiber sheets and the thermoplastic resin sheets obtained in Production Examples 1 to 19 were laminated at the ratios shown in Tables 3 to 5 to obtain laminates.

The laminates were inserted into a preheated hot press followed by molding under conditions shown in Tables 3 to 5 (temperature, pressing time, pressing pressure) to obtain fiber-reinforced resin composites (FRP molded articles). Incidentally, in lamination process, the amounts of thermoplastic resin sheet and reinforcing fibers were adjusted in consideration of preventing bias in the reinforcing fibers and so that the thickness of the fiber-reinforced resin composition reached the target thickness after heating and pressing. Evaluations of the ultimately obtained fiber-reinforced resin composites are shown in Tables 3 to 5. Incidentally, in Table 5, the fiber-reinforced resin composite of Comparative Example 5 demonstrated a large number of fibers that had slipped down resulting in uneven strength that prevented the composite from being properly evaluated, and this composite was indicated with a "-" mark.

[Table 1]

| | | Units | Prod. Ex.1 | Prod. Ex.2 | Prod. Ex.3 | Prod. Ex.4 | Prod. Ex.5 | Prod. Ex.6 | Prod. Ex.7 | Prod. Ex.8 | Prod. Ex.9 | Prod. Ex.10 | Prod. Ex.11 |
|---|---|---|---|---|---|---|---|---|---|---|---|---|---|
| Composition | A-1 | Parts by weight | 90 | 75 | 95 | | 90 | 90 | 90 | 90 | 90 | 90 | 90 |
| | A-2 | | | | | 90 | | | | | | | |
| | B-1 | | | | | | 10 | | | | | | |
| | B-2 | | 10 | 25 | 5 | 10 | | | | | 10 | 10 | 10 |
| | B-3 | | | | | | | 10 | | | | | |
| | B-4 | | | | | | | | 10 | | | | |
| | B-5 | | | | | | | | | 10 | | | |
| | C-1 | | | | | | | | | | 3 | | 10 |
| | C-2 | | | | | | | | | | | 10 | |
| | D-1 | | | | | | | | | | | | 15 |
| Production | Extrusion temp. | °C | 255 | 265 | 255 | 255 | 255 | 250 | 250 | 260 | 250 | 250 | 250 |
| | Spinning speed | m/min | 22 | 26 | 20 | 22 | 20 | 19 | 20 | 18 | 23 | 24 | 25 |
| Evaluations | Specific gravity | $g/cm^3$ | 0.93 | 0.98 | 0.92 | 0.93 | 0.93 | 0.93 | 0.93 | 0.93 | 0.93 | 0.93 | 0.93 |
| | Basis weight | $g/m^2$ | 30 | 23 | 30 | 27 | 30 | 32 | 30 | 35 | 25 | 24 | 23 |
| | Degree of deformation | | 4.0 | 3.8 | 4.0 | 4.0 | 4.0 | 4.1 | 4.0 | 4.1 | 3.9 | 3.9 | 3.8 |
| | Hollow ratio | | 18 | 18 | 18 | 18 | 18 | 18 | 18 | 18 | 18 | 18 | 18 |
| | Avg. thickness | µm | - | - | - | - | - | - | - | - | - | - | - |

[Table 2]

| | | Units | Prod. Ex. 12 | Prod. Ex. 13 | Comp. Prod. Ex.14 | Comp. Prod. Ex.15 | Comp. Prod. Ex.16 | Prod. Ex. 17 | Prod. Ex. 18 | Comp. Prod. Ex.19 |
|---|---|---|---|---|---|---|---|---|---|---|
| Composition | A-1 | Parts by weight | 90 | 90 | 99 | 50 | 100 | 90 | 90 | 100 |
| | A-2 | | | | | | | | | |
| | B-1 | | | | | | | | | |
| | B-2 | | 10 | 10 | 1 | 50 | | 10 | | |
| | B-3 | | | | | | | | | |
| | B-4 | | | | | | | | 10 | |
| | B-5 | | | | | | | | | |
| | C-1 | | | | | | 10 | | | 3 |
| | C-2 | | 10 | | | | | 10 | | |
| | D-1 | | 15 | 5 | | | | | | |
| Production | Extrusion temp. | °C | 250 | 255 | 250 | 280 | 250 | 250 | 250 | 250 |
| | Spinning speed | m/min | 28 | 24 | 21 | 15 | 26 | - | - | - |
| Evaluations | Specific gravity | $g/cm^3$ | 0.93 | 0.93 | 0.91 | 1.05 | 0.90 | 0.93 | 0.93 | 0.90 |
| | Basis weight | $g/m^2$ | 20 | 24 | 28 | 50 | 21 | - | - | - |
| | Degree of deformation | | 3.7 | 3.9 | 4.0 | 4.3 | 3.8 | - | - | - |
| | Hollow ratio | | 17 | 18 | 18 | 19 | 18 | - | - | - |
| | Avg. thickness | μm | - | - | - | - | - | 30 | 30 | 30 |

[Table 3]

| | | | Ex.1 | Ex.2 | Ex.3 | Ex.4 | Ex.5 | Ex.6 | Ex.7 | Ex.8 | Ex.9 | Ex.10 | Ex.11 |
|---|---|---|---|---|---|---|---|---|---|---|---|---|---|
| Composition | Substrate | Type | Prod.Ex.1 | Prod.Ex.1 | Prod.Ex.1 | Prod.Ex.1 | Prod.Ex.1 | Prod.Ex.1 | Prod.Ex.1 | Prod.Ex.1 | Prod.Ex.1 | Prod.Ex.2 | Prod.Ex.3 |
| | | Pbw | 100 | 100 | 100 | 100 | 100 | 100 | 100 | 100 | 100 | 100 | 100 |
| | Reinforcing fibers | Type | F1-1 | FI-1 | FI-1 | FI-2 | FI-2 | FI-3 | FI-4 | FI-5 | FI-6 | FI-2 | FI-2 |
| | | Pbw | 100 | 25 | 140 | 50 | 100 | 100 | 100 | 140 | 130 | 100 | 100 |
| | Thickness | mm | 1.0 | 1.0 | 1.0 | 1.0 | 1.0 | 1.0 | 1.0 | 1.0 | 1.0 | 1.0 | 1.0 |
| Production | Pressing temp. | °C | 250 | 250 | 260 | 250 | 250 | 250 | 250 | 250 | 250 | 260 | 250 |
| | Pressing time | min | 10 | 10 | 10 | 10 | 10 | 10 | 10 | 10 | 10 | 10 | 10 |
| | Pressing pressure | MPa | 15 | 15 | 15 | 15 | 15 | 15 | 15 | 15 | 15 | 15 | 15 |
| Evaluations | Molding processability | - | Good | Good | Good | Good | Good | Good | Good | Good | Good | Good | Good |
| | Hollow ratio | No. | 0 | 0 | 0 | 0 | 0 | 0 | 1 | 1 | 0 | 0 | 0 |
| | Flexural modulus | GPa | 17.2 | 8.8 | 25.9 | 10.9 | 16.8 | 15.4 | 10.2 | 8.9 | 13.5 | 17.0 | 15.4 |
| | Bending strength | MPa | 220 | 122 | 280 | 144 | 205 | 199 | 172 | 169 | 187 | 212 | 190 |
| | Heat stability | - | Good | Good | Good | Good | Good | Good | Good | Good | Good | Good | Good |
| | Chemical resistance | - | Good | Good | Good | Good | Good | Good | Good | Good | Good | Good | Good |

[Table 4]

| | | | Ex.12 | Ex.13 | Ex.14 | Ex.15 | Ex.16 | Ex.17 | Ex.18 | Ex.19 | Ex.20 | Ex.21 | Ex.22 |
|---|---|---|---|---|---|---|---|---|---|---|---|---|---|
| Composition | Substrate | Type | Prod.Ex.4 | Prod.Ex.5 | Prod.Ex.6 | Prod.Ex.7 | Prod.Ex.8 | Prod.Ex.9 | Prod.Ex. 10 | Prod.Ex. 10 | Prod.Ex. 10 | Prod.Ex. 10 | Prod.Ex.11 |
| | | Pbw | 100 | 100 | 100 | 100 | 100 | 100 | 100 | 100 | 100 | 100 | 100 |
| | Reinforcing fibers | Type | FI-2 | FI-2 | FI-2 | FI-2 | FI-2 | FI-2 | FI-1 | FI-2 | FI-1 | FI-1 | FI-2 |
| | | Pbw | 100 | 100 | 100 | 100 | 100 | 100 | 100 | 100 | 50 | 140 | 100 |
| | Thickness | mm | 1.0 | 1.0 | 1.0 | 1.0 | 1.0 | 1.0 | 1.0 | 1.0 | 1.0 | 1.0 | 1.0 |
| Production | Pressing temp. | °C | 250 | 250 | 250 | 250 | 260 | 250 | 250 | 250 | 250 | 250 | 250 |
| | Pressing time | min | 10 | 10 | 10 | 10 | 10 | 10 | 10 | 10 | 10 | 10 | 10 |
| | Pressing pressure | MPa | 15 | 15 | 15 | 15 | 15 | 15 | 15 | 15 | 15 | 15 | 15 |
| Evaluations | Molding processability | - | Good | Good | Good | Good | Good | Good | Good | Good | Good | Good | Moderate |
| | Hollow ratio | No. | 0 | 0 | 0 | 1 | 1 | 0 | 0 | 0 | 0 | 0 | 3 |
| | Flexural modulus | GPa | 16.2 | 16.4 | 15.8 | 17.1 | 16.2 | 17.0 | 20.2 | 18.5 | 11.2 | 28.9 | 18.9 |
| | Bending strength | MPa | 203 | 209 | 195 | 212 | 190 | 235 | 312 | 273 | 230 | 482 | 280 |
| | Heat stability | - | Good | Good | Good | Good | Good | Good | Good | Good | Good | Good | Moderate |
| | Chemical resistance | - | Good | Good | Good | Good | Good | Good | Good | Good | Good | Good | Good |

[Table 5]

| | | | Ex.23 | Ex.24 | Ex.25 | Ex.26 | Comp.Ex.1 | Comp.Ex.2 | Comp.Ex.3 | Comp.Ex.4 | Comp.Ex.5 | Com.Ex.6 |
|---|---|---|---|---|---|---|---|---|---|---|---|---|
| Composition | Substrate | Type | Prod.Ex. 12 | Prod.Ex. 13 | Prod.Ex. 17 | Prod.Ex. 18 | Comp. Prod.Ex. 14 | Comp. Prod.Ex. 15 | Comp. Prod.Ex. 16 | Prod.Ex.1 | Prod.Ex.1 | Comp. Prod.Ex. 19 |
| | | Pbw | 100 | 100 | 100 | 100 | 100 | 100 | 100 | 100 | 100 | 100 |
| | Reinforcing fibers | Type | FI-2 | FI-2 | FI-2 | FI-2 | FI-2 | FI-2 | FI-2 | FI-2 | FI-2 | FI-2 |
| | | Pbw | 100 | 100 | 100 | 100 | 100 | 100 | 100 | 10 | 180 | 100 |
| | Thickness | mm | 1.0 | 1.0 | 1.0 | 1.0 | 1.0 | 1.0 | 1.0 | 1.0 | 1.0 | 1.0 |
| Production | Pressing temp. | °C | 250 | 250 | 260 | 260 | 250 | 270 | 250 | 250 | 250 | 250 |
| | Pressing time | min | 10 | 10 | 10 | 10 | 10 | 10 | 10 | 10 | 10 | 10 |
| | Pressing pressure | MPa | 15 | 15 | 15 | 15 | 15 | 15 | 15 | 15 | 15 | 15 |
| Evaluations | Molding processability | - | Moderate | Good | Good | Good | Good | Good | Good | Good | Poor | Good |
| | Hollow ratio | No. | 2 | 1 | 3 | 2 | 2 | 8 | 5 | 0 | >10 | 9 |
| | Flexural modulus | GPa | 19.1 | 16.9 | 17.9 | 16.2 | 4.3 | 18.1 | 6.4 | 3.2 | - | 5.9 |
| | Bending strength | MPa | 284 | 220 | 254 | 192 | 65 | 224 | 73 | 120 | - | 67 |
| | Heat stability | - | Moderate | Good | Good | Good | Good | Good | Good | Good | - | Good |
| | Chemical resistance | - | Good | Good | Good | Good | Good | Poor | Good | Good | - | Good |

[Production Example 20] (Production of Sheet Composed of Thermoplastic Resin Fibers)

A thermoplastic resin sheet was produced in the same manner as Production Example 10 with the exception of changing the amount of modified polyolefin (C-1) to 50 parts by weight based on 100 parts by weight of the total of Component A and Component B. The results of evaluating the thermoplastic resin sheet are shown in Table 6.

[Example 27]

A laminate was produced in the same manner as Example 18 with the exception of using the thermoplastic resin sheet obtained in Production Example 20 followed by producing a fiber-reinforced resin composite. Evaluations of the resulting fiber-reinforced resin composite are shown in Table 7.

[Table 6]

| | | Units | Production Example 20 |
|---|---|---|---|
| Composition | A-1 | Parts by weight | 90 |
| | B-2 | | 10 |
| | C-1 | | 50 |
| | D-1 | | - |
| Production | Extrusion temperature | °C | 250 |
| | Spinning speed | m/min | 24 |
| Evaluations | Specific gravity | $g/cm^3$ | 0.93 |
| | Basis weight | $g/m^2$ | 23 |
| | Degree of deformation | - | 3.9 |
| | Hollow ratio | - | 18 |
| | Average thickness | μm | - |

[Table 7]

| | | | Example 27 |
|---|---|---|---|
| Composition | Substrate | Type | Production Example 20 |
| | | Parts by weight | 100 |
| | Reinforcing fibers | Type | FI-1 |
| | | Parts by weight | 100 |
| | Thickness | mm | 1.0 |
| Production | Pressing temperature | °C | 250 |
| | Pressing time | min | 10 |
| | Pressing pressure | MPa | 15 |
| Evaluations | Molding processability | - | Good |
| | Hollow ratio | No. | 0 |
| | Flexural modulus | GPa | 21.1 |
| | Bending strength | MPa | 320 |
| | Heat stability | - | Good |
| | Chemical resistance | - | Good |

REFERENCE SIGNS LIST

1: Deformed fiber cross-section
2: Air bubble
3: Circumscribed circle diameter
4: Inscribed circle diameter
5: Thermoplastic resin sheet layer
6: Reinforcing fiber sheet layer

## Claims

**1.** A laminate of a reinforcing fiber sheet and a thermoplastic resin sheet; wherein,

(i) the thermoplastic resin sheet is a polypropylene resin composition composed of (A) 70 parts by weight to 95 parts by weight of polypropylene resin (Component A) and (B) 30 parts by weight to 5 parts by weight of polycarbonate resin (Component B), and
(ii) the content of reinforcing fiber constituting the reinforcing fiber sheet is 20 parts by weight to 150 parts by weight, based on 100 parts by weight of the resin component composed of Component A and Component B,

and wherein the thermoplastic resin sheet is formed of mesh-like hollow fibers.

**2.** The laminate according to claim 1, wherein Component B is a polycarbonate resin comprising 20 mol% to 100 mol% of a carbonate constituent unit represented by the following formula [1] among all carbonate constituent units:

[Chem. 1]

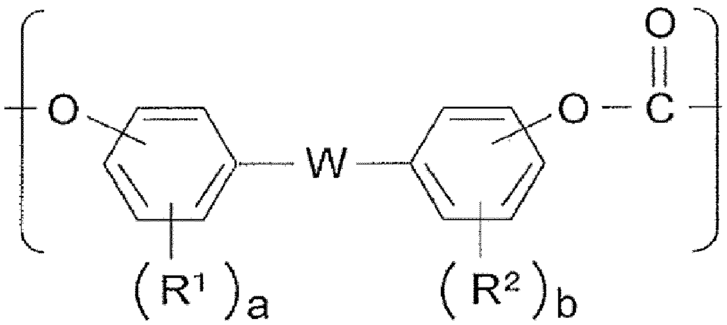

[1]

[wherein, $R^1$ and $R^2$ respectively and independently represent a group selected from the group consisting of a hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 6 to 14 carbon atoms, aryloxy group having 6 to 14 carbon atoms, aralkyl group having 7 to 20 carbon atoms, aralkyloxy group having 7 to 20 carbon atoms, nitro group, aldehyde group, cyano group and carboxyl group, and in the case of a plurality of each, the plurality of groups may be the same or different, a and b respectively represent an integer of 1 to 4, and W represents a single bond or at least one group selected from the group consisting of groups represented by the following general formula [2]:

[Chem. 2]

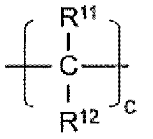 , 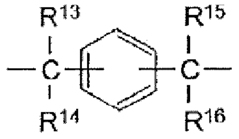 , 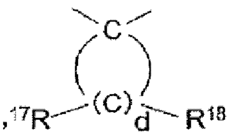 , 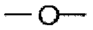 , 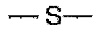 , 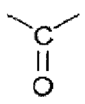 , 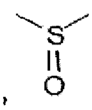

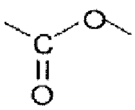 , 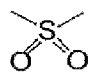 , 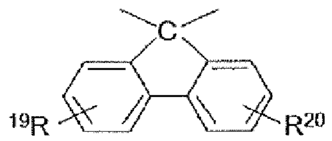 , 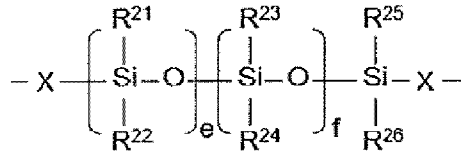 [2]

(wherein, $R^{11}$, $R^{12}$, $R^{13}$, $R^{14}$, $R^{15}$, $R^{16}$, $R^{17}$ and $R^{18}$ respectively and independently represent a group selected from the group consisting of a hydrogen atom, alkyl group having 1 to 18 carbon atoms, aryl group having 6 to 14 carbon atoms and aralkyl group having 7 to 20 carbon atoms, $R^{19}$ and $R^{20}$ respectively and independently represent a group selected from the group consisting of a hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, $R^{21}$, $R^{22}$, $R^{23}$, $R^{24}$, $R^{25}$ and $R^{26}$ respectively and independently represent a hydrogen atom, alkyl group having 1 to 12 carbon atoms or substituted or unsubstituted aryl group having 6 to 12 carbon atoms, and in the case of a plurality of each, the plurality of groups may be the same or different, c represents an integer of 1 to 10, d represents an integer of 4 to 7, e represents a natural number, f represents 0 or a natural number, e + f represents a natural number of 150 or less, and X represents a divalent aliphatic group having 2 to 8 carbon atoms)].

3. The laminate according to claim 1 or 2, wherein the polypropylene resin composition further comprises (C) a modified polyolefin resin (Component C) at 1 part by weight to 100 parts by weight based on 100 parts by weight of the resin component composed of Component A and Component B.

4. The laminate according to any of claims 1 to 3, wherein the polypropylene resin composition further comprises (D) a styrene-based thermoplastic elastomer (Component D) at 1 part by weight to 20 parts by weight based on 100 parts by weight of the resin component composed of Component A and Component B.

5. The laminate according to any of claims 1 to 4, wherein the reinforcing fiber sheet is a woven knit fabric, nonwoven fabric or unidirectional sheet.

6. The laminate according to any of claims 1 to 5, wherein the fibers constituting the reinforcing fiber sheet are at least one type of fiber selected from the group consisting of carbon fibers and glass fibers.

7. The laminate according to claim 6, wherein the fibers constituting the reinforcing fiber sheet are carbon fibers in which the ratio of the number of atoms of oxygen (O) to the number of atoms of carbon (C) on the fiber surface as measured by X-ray photoelectron spectroscopy in the form of the surface oxygen concentration (O/C) is 0.15 or more.

8. A fiber-reinforced resin composite formed of the laminate according to any of Claims 1 to 7.

9. A fiber-reinforced resin composite obtained by carrying out pressure treatment on the laminate according to any of Claims 1 to 7.

10. A method for producing a fiber-reinforced resin composite, comprising: carrying out pressure treatment on the laminate according to any of claims 1 to 7 at a temperature equal to or higher than the melting temperature of the thermoplastic resin constituting the thermoplastic resin sheet and lower than the heat resistant temperature of the reinforcing fiber constituting the reinforcing fiber sheet.

## Patentansprüche

1. Laminat aus einer Faserverstärkungsschicht und einer thermoplastischen Harzschicht; wobei

   (i) die thermoplastische Harzschicht eine Polypropylenharzzusammensetzung ist, bestehend aus (A) 70 Gewichtsteilen bis 95 Gewichtsteilen Polypropylenharz (Komponente A) und (B) 30 Gewichtsteilen bis 5 Gewichtsteilen Polycarbonatharz (Komponente B), und
   (ii) der Gehalt an Verstärkungsfasern, welche die Faserverstärkungsschicht bilden, 20 Gewichtsteile bis 150 Gewichtsteile beträgt, bezogen auf 100 Gewichtsteile der Harzkomponenten, die aus Komponente A und Komponente B besteht,

   und wobei die thermoplastische Harzschicht aus maschenartigen Hohlfasern besteht.

2. Laminat gemäß Anspruch 1, wobei die Komponente B ein Polycarbonatharz ist, umfassend 20 mol% bis 100 mol% einer Carbonataufbaueinheit ist, dargestellt durch die folgende Formel [1] unter den gesamten Carbonataufbaueinheiten:

[Chem.]

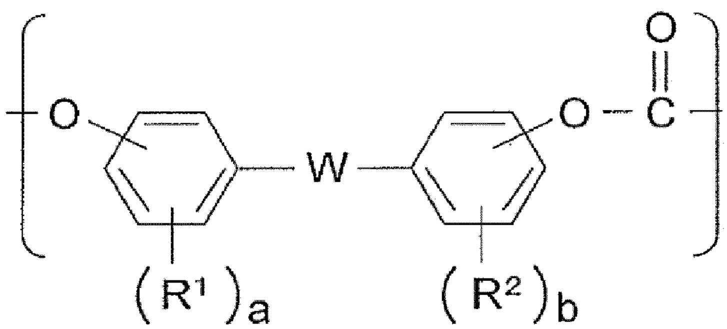

[1]

[worin $R^1$ und $R^2$ jeweils und unabhängig eine Gruppe darstellen, ausgewählt aus der Gruppe, bestehend aus einem Wasserstoffatom, Halogenatom, Alkylgruppe mit 1 bis 18 Kohlenstoffatomen, Alkoxygruppe mit 1 bis 18 Kohlenstoffatomen, Cycloalkylgruppe mit 6 bis 20 Kohlenstoffatomen, Cycloalkoxygruppe mit 6 bis 20 Kohlenstoffatomen, Alkenylgruppe mit 2 bis 10 Kohlenstoffatomen, Arylgruppe mit 6 bis 14 Kohlenstoffatomen, Aryloxygruppe bis 6 bis 14 Kohlenstoffatomen, Aralkylgruppe mit 7 bis 20 Kohlenstoffatomen, Aralkyloxygruppe mit 7 bis 20 Kohlenstoffatomen, Nitrogruppe, Aldehydgruppe, Cyanogruppe und Carboxylgruppe, und im Fall des Vorliegens einer Mehrzahl derselben kann die Mehrzahl von Gruppen gleich oder verschieden sein, und a bzw. b stellen eine ganze Zahl von 1 bis 4 dar, und W stellt eine Einfachbindung dar oder wenigstens eine Gruppe, ausgewählt aus der Gruppe, bestehend aus Gruppen, dargestellt durch die folgende allgemeine Formel [2]:

[Chem. 2]

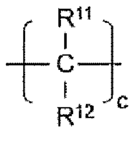 , 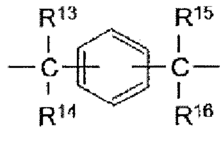 , 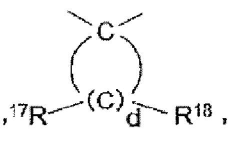 , 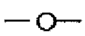 , 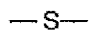 , 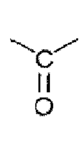 , 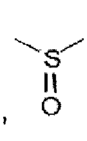

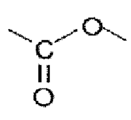 , 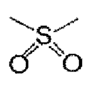 , 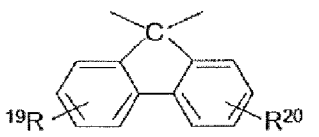 , 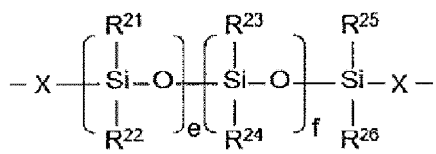

[2]

worin $R^{11}$, $R^{12}$, $R^{13}$, $R^{14}$, $R^{15}$, $R^{16}$, $R^{17}$ und $R^{18}$ jeweils und unabhängig eine Gruppe darstellen, ausgewählt aus der Gruppe, bestehend aus einem Wasserstoffatom, einer Alkylgruppe mit 1 bis 18 Kohlenstoffatomen, einer Arylgruppe mit 6 bis 14 Kohlenstoffatomen und einer Aralkylgruppe mit 7 bis 20 Kohlenstoffatomen, $R^{19}$ und $R^{20}$ jeweils und unabhängig eine Gruppe darstellen, ausgewählt aus der Gruppe, bestehend aus einem Wasserstoffatom, einem Halogenatom, einer Alkylgruppe mit 1 bis 18 Kohlenstoffatomen, einer Alkoxygruppe mit 1 bis 10 Kohlenstoffatomen, einer Cycloalkylgruppe mit 6 bis 20 Kohlenstoffatomen, einer Cycloalkoxygruppe mit 6 bis 20 Kohlenstoffatomen, einer Alkenylgruppe mit 2 bis 10 Kohlenstoffatomen, einer Arylgruppe mit 6 bis 14 Kohlenstoffatomen, einer Aryloxygruppe mit 6 bis 10 Kohlenstoffatomen, einer Aralkylgruppe mit 7 bis 20 Kohlenstoffatomen, einer Aralkyloxygruppe mit 7 bis 20 Kohlenstoffatomen, einer Nitrogruppe, einer Aldehydgruppe, einer Cyanogruppe und einer Carboxylgruppe, $R^{21}$, $R^{22}$, $R^{23}$, $R^{24}$, $R^{25}$ und $R^{26}$ jeweils und unabhängig ein Wasserstoffatom darstellen, eine Alkylgruppe mit 1 bis 12 Kohlenstoffatomen oder einer substituierten oder unsubstituierten Arylgruppe mit 6 bis 12 Kohlenstoffatomen, und im Fall des Vorliegens einer Mehrzahl derselben kann die Mehrzahl Gruppen gleich oder verschieden sein, c stellt eine ganze Zahl von 1 bis 10 dar, d stellt eine ganze Zahl von 4 bis 7 dar, e stellt eine natürliche Zahl dar, f stellt 0 oder eine natürliche Zahl dar, e + f stellt eine natürliche Zahl von 150 oder weniger dar, und X stellt eine zweiwertige aliphatische Gruppe mit 2 bis 8 Kohlenstoffatomen dar].

**3.** Laminat gemäß Anspruch 1 oder 2, wobei die Polypropylenharzzusammensetzung des Weiteren (C) ein modifiziertes Polyolefinharz (Komponente C) zu 1 Gewichtsteil bis 100 Gewichtsteilen, bezogen auf 100 Gewichtsteile der Harzkomponente, bestehend aus Komponente A und Komponente B, umfasst.

**4.** Laminat gemäß einem der Ansprüche 1 bis 3, wobei die Polypropylenharzzusammensetzung des Weiteren (D) ein Styrolbasiertes thermoplastisches Elastomer (Komponente D) zu 1 Gewichtsteil bis 20 Gewichtsteilen, bezogen auf 100 Gewichtsteile der Harzkomponente, bestehend aus Komponente A und Komponente B, umfasst.

**5.** Laminat gemäß einem der Ansprüche 1 bis 4, wobei die Faserverstärkungsschicht ein Strickgewebe, Vlies oder eine unidirektionale Schicht ist.

**6.** Laminat gemäß einem der Ansprüche 1 bis 5, wobei die die Faserverstärkungsschicht aufbauenden Fasern aus wenigstens einem Fasertyp sind, ausgewählt aus der Gruppe, bestehend aus Carbonfasern und Glasfasern.

**7.** Laminat gemäß Anspruch 6, wobei die die Faserverstärkungsschicht aufbauende Fasern Kohlenstofffasern sind, in welchen das Verhältnis der Anzahl Sauerstoffatome (0) zu der Anzahl Kohlenstoffatome (C) an der Faseroberfläche, gemessen durch Röntgenphotoelektronenspektroskopie, in Form der Sauerstoffoberflächenkonzentration (0/C) 0,15 oder mehr beträgt.

**8.** Faserverstärktes Harzkomposit, gebildet aus dem Laminat gemäß einem der Ansprüche 1 bis 7.

**9.** Faserverstärktes Harzkomposit, erhalten durch Ausführen einer Druckbehandlung an dem Laminat gemäß einem der Ansprüche 1 bis 7.

**10.** Verfahren zur Herstellung eines faserverstärkten Harzkomposits, umfassend: Ausführen einer Druckbehandlung an dem Laminat gemäß einem der Ansprüche 1 bis 7 bei einer Temperatur, die gleich oder höher ist als die Schmelztemperatur des thermoplastischen Harzes, welche die thermoplastische Harzschicht aufbaut, und niedriger als die Hitzebeständigkeitstemperatur der Verstärkungsfaser, welche die Faserverstärkungsschicht aufbaut.

## Revendications

**1.** Stratifié d'une feuille de fibres de renforcement et d'une feuille de résine thermoplastique ; dans lequel,

(i) la feuille de résine thermoplastique est une composition de résine de polypropylène composée de (A) 70 parties en poids à 95 parties en poids de résine de polypropylène (composant A) et (B) 30 parties en poids à 5 parties en poids de résine de polycarbonate (composant B), et
(ii) la teneur en fibres de renforcement constituant la feuille de fibres de renforcement est de 20 parties en poids à 150 parties en poids, sur la base de 100 parties en poids du composant de résine composé du composant A et du composant B,

et dans lequel la feuille de résine thermoplastique est formée de fibres creuses en forme de mailles.

**2.** Stratifié selon la revendication 1, dans lequel le composant B est une résine de polycarbonate comprenant de 20

% en moles à 100 % en moles d'une unité constitutive de carbonate représentée par la formule [1] suivante parmi toutes les unités constitutives de carbonate :

[Chem. 1]

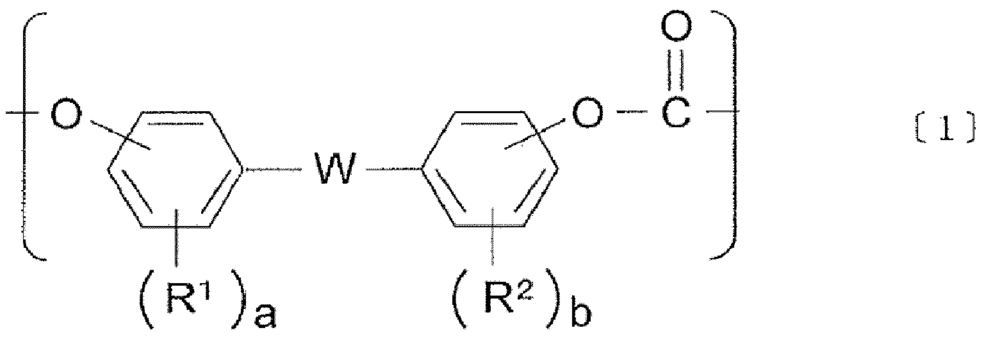

[dans laquelle $R^1$ et $R^2$ représentent respectivement et indépendamment un groupe choisi dans le groupe constitué par un atome d'hydrogène, un atome d'halogène, un groupe alkyle ayant 1 à 18 atomes de carbone, un groupe alcoxy ayant 1 à 18 atomes de carbone, un groupe cycloalkyle ayant 6 à 20 atomes de carbone, un groupe cycloalcoxy ayant 6 à 20 atomes de carbone, un groupe alcényle ayant 2 à 10 atomes de carbone, un groupe aryle ayant 6 à 14 atomes de carbone, un groupe aryloxy ayant 6 à 14 atomes de carbone, un groupe aralkyle ayant 7 à 20 atomes de carbone, un groupe aralkyloxy ayant de 7 à 20 atomes de carbone, un groupe nitro, un groupe aldéhyde, un groupe cyano et un groupe carboxyle, et dans le cas d'une pluralité de chacun, la pluralité des groupes peut être identique ou différente, a et b représentent respectivement un nombre entier de 1 à 4, et W représente une liaison simple ou au moins un groupe choisi parmi le groupe constitué par les groupes représentés par la formule générale [2] suivante :

[Chem. 2]

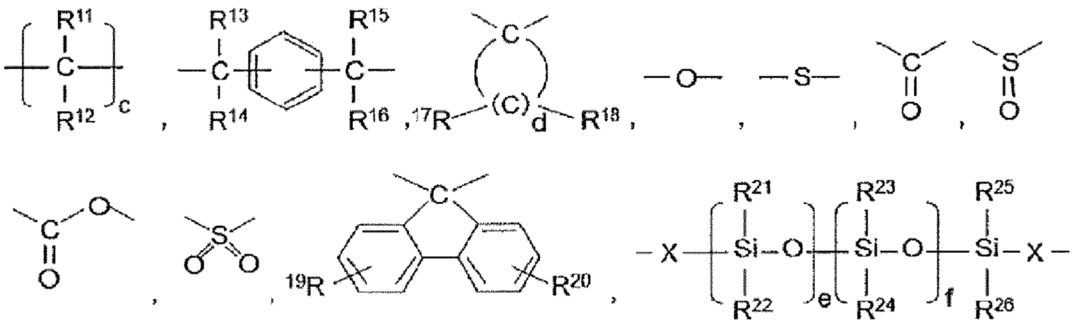

(dans laquelle $R^{11}$, $R^{12}$, $R^{13}$, $R^{14}$, $R^{15}$, $R^{16}$, $R^{17}$ et $R^{18}$ représentent respectivement et indépendamment un groupe choisi parmi le groupe constitué par un atome d'hydrogène, un groupe alkyle ayant 1 à 18 atomes de carbone, un groupe aryle ayant 6 à 14 atomes de carbone et un groupe aralkyle ayant 7 à 20 atomes de carbone, $R^{19}$ et $R^{20}$ représentent respectivement et indépendamment un groupe choisi parmi le groupe constitué par un atome d'hydrogène, un atome d'halogène, un groupe alkyle ayant 1 à 18 atomes de carbone, un groupe alcoxy ayant 1 à 10 atomes de carbone, un groupe cycloalkyle ayant 6 à 20 atomes de carbone, un groupe cycloalcoxy ayant 6 à 20 atomes de carbone, un groupe alcényle ayant 2 à 10 atomes de carbone, un groupe aryle ayant 6 à 14 atomes de carbone, un groupe aryloxy ayant 6 à 10 atomes de carbone, un groupe aralkyle ayant 7 à 20 atomes de carbone, un groupe aralkyloxy ayant 7 à 20 atomes de carbone, un groupe nitro, un groupe aldéhyde, un groupe cyano et un groupe carboxyle, $R^{21}$, $R^{22}$, $R^{23}$, $R^{24}$, $R^{25}$ et $R^{26}$ représentent respectivement et indépendamment un atome d'hydrogène, un groupe alkyle ayant 1 à 12 atomes de carbone ou un groupe aryle substitué ou non-substitué ayant 6 à 12 atomes de carbone, et dans le cas d'une pluralité de chacun, la pluralité des groupes peut être la même ou différente, c représente un nombre entier de 1 à 10, d représente un nombre entier de 4 à 7, e représente un nombre naturel, f représente 0 ou un nombre naturel, e + f représente un nombre naturel égal ou inférieur à 150, et X représente un groupe aliphatique divalent ayant 2 à 8 atomes de carbone)].

3. Stratifié selon la revendication 1 ou 2, dans lequel la composition de résine de polypropylène comprend en outre

(C) une résine de polyoléfine modifiée (composant C) à raison de 1 partie en poids à 100 parties en poids sur la base de 100 parties en poids du composant de résine composé du composant A et du composant B.

**4.** Stratifié selon l'une quelconque des revendications 1 à 3, dans lequel la composition de résine de polypropylène comprend en outre (D) un élastomère thermoplastique à base de styrène (composant D) à raison de 1 partie en poids à 20 parties en poids pour 100 parties en poids du composant de résine composé du composant A et du composant B.

**5.** Stratifié selon l'une quelconque des revendications 1 à 4, dans lequel la feuille de fibres de renforcement est un tissu tricoté, un tissu non tissé ou une feuille unidirectionnelle.

**6.** Stratifié selon l'une quelconque des revendications 1 à 5, dans lequel les fibres constituant la feuille de fibres de renforcement sont au moins un type de fibres choisi dans le groupe constitué par les fibres de carbone et les fibres de verre.

**7.** Stratifié selon la revendication 6, dans lequel les fibres constituant la feuille de fibres de renforcement sont des fibres de carbone dans lesquelles le rapport entre le nombre d'atomes d'oxygène (O) et le nombre d'atomes de carbone (C) à la surface des fibres, tel que mesuré par spectroscopie photoélectronique à rayons X sous la forme de la concentration d'oxygène en surface (O/C), est égal ou supérieur à 0,15.

**8.** Composite en résine renforcée par des fibres, formé du stratifié selon l'une quelconque des revendications 1 à 7.

**9.** Composite de résine renforcé par des fibres obtenu en effectuant un traitement sous pression sur le stratifié selon l'une quelconque des revendications 1 à 7.

**10.** Procédé de production d'un composite de résine renforcé par des fibres, comprenant : la réalisation d'un traitement sous pression sur le stratifié selon l'une quelconque des revendications 1 à 7 à une température égale ou supérieure à la température de fusion de la résine thermoplastique constituant la feuille de résine thermoplastique et inférieure à la température de résistance à la chaleur de la fibre de renforcement constituant la feuille de fibres de renforcement.

FIG. 1

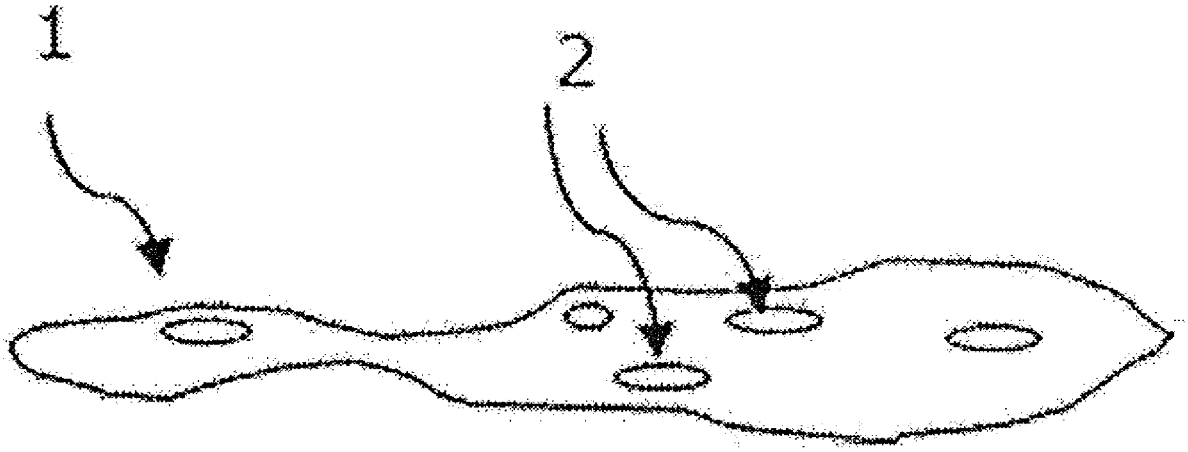


FIG. 2

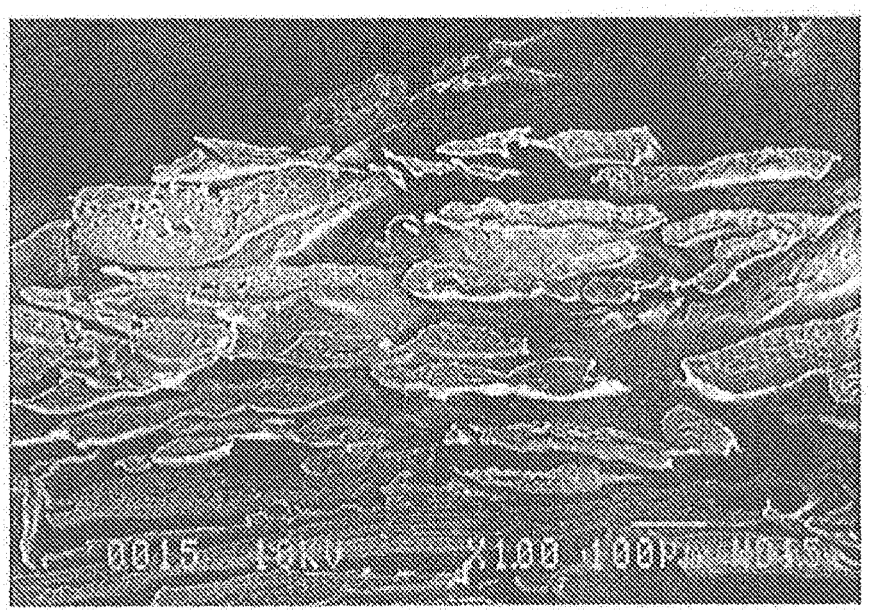

FIG. 3

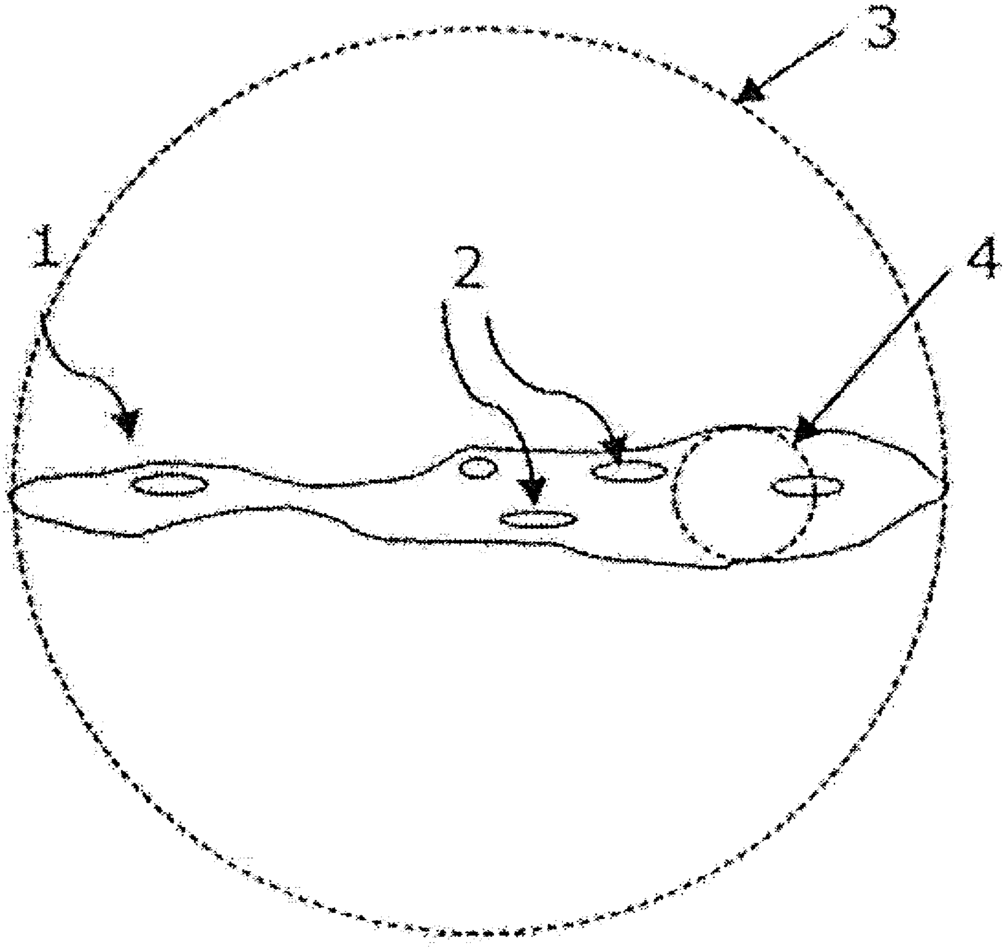


FIG. 4

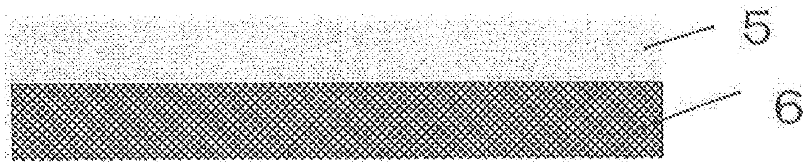


FIG. 5

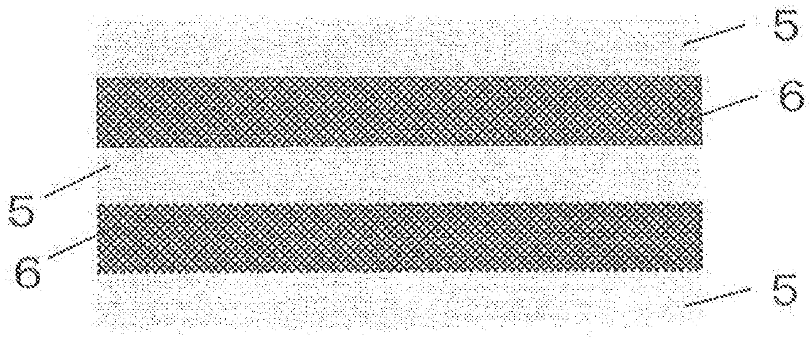

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4454287 A
- JP 55050041 A
- JP 58113239 A
- JP 61252371 A
- JP 2010150359 A
- JP 2016222774 A